# EUROPÄISCHE PATENTSCHRIFT

(11) **EP 3 012 961 B1**
(45) Veröffentlichungstag und Bekanntmachung des Hinweises auf die Patenterteilung: **27.11.2019**
(21) Anmeldenummer: 15191079.1
(22) Anmeldetag: 22.10.2015
(51) Int. Cl.: H02P 3/00

(54) **ANTRIEB MIT EINER SICHERHEITSBREMSE, MOTORSTEUERUNGSSYSTEM UND VERFAHREN ZUM BETREIBEN EINES MOTORSTEUERUNGSSYSTEMS**
DRIVE WITH A SAFETY BRAKE, MOTOR CONTROL SYSTEM AND METHOD FOR OPERATING A MOTOR CONTROL SYSTEM
ENTRAINEMENT DOTE D'UN FREIN DE SECURITE, SYSTEME DE COMMANDE DE MOTEUR ET PROCEDE DE FONCTIONNEMENT D'UN SYSTEME DE COMMANDE DE MOTEUR

(30) Priorität: 24.10.2014 DE 102014115529
(43) Veröffentlichungstag der Anmeldung: 27.04.2016
(73) Patentinhaber: Beckhoff Automation GmbH, 33415 Verl (DE)
(72) Erfinder: SACHS, Jens, 32469 Petershagen (DE); ZUTZ, Robert, 33415 Verl (DE); BRÖCKER, Rainer, 42489 Wülfrath (DE)
(74) Vertreter: Patentanwaltskanzlei WILHELM & BECK

(56) Entgegenhaltungen:
- DE-A1-102007 059 492
- JP-A- S60 152 284
- JP-A- S61 269 686
- US-B1- 6 525 504
- US-B1- 7 248 008

## Beschreibung

Die vorliegende Erfindung betrifft einen Antrieb mit einer Sicherheitsbremse, ein Motorsteuerungssystem und ein Verfahren zum Betreiben eines Motorsteuerungssystems. Insbesondere betrifft die Erfindung Antriebe und Motorsteuerungssysteme mit einem Elektromotor.

Antriebe mit Elektromotoren werden unter anderem in der Automatisierungstechnik eingesetzt, um Maschinenteile in Bewegung zu versetzen, etwa bei Verpackungsmaschinen, Werkzeugmaschinen, Umformmaschinen, Transportsystemen oder Robotern. Um einen sicheren Betrieb derartiger Antriebe zu gewährleisten, müssen diejenigen Bewegungen zuverlässig verhindert werden, welche ein Sicherheitsrisiko darstellen. Ein solches Sicherheitsrisiko kann unter anderem in einer Gefährdung von Bedien- oder Wartungspersonal oder in einer Bewegung liegen, die zu einer Beschädigung der Maschine führt, wie es etwa bei einem ungebremsten Auffahren auf einen Anschlag der Fall sein kann.

Falls unsichere Bewegungen nicht durch konstruktive Merkmale der bewegten Teile ausgeschlossen werden können, werden notwendige Sicherheitsfunktionen oft in der Steuerungstechnik der Antriebe implementiert. Die europäische Norm EN 61508 enthält Richtlinien zur Bewertung der funktionalen Sicherheit elektrischer, elektronischer oder programmgesteuerter Systeme. Die Norm EN ISO 13849 gibt Gestaltungsleitsätze für sicherheitsbezogene Teile von Maschinensteuerungen vor. Je nach Schadensausmaß und Schadenshäufigkeit werden sicherheitskritische Zustände beziehungsweise Systeme, die das Auftreten solcher Zustände verhindern, einer Sicherheitsanforderungsstufe (safety integrity level, SIL, oder performance level, PL) zugeordnet.

Anforderungen an die funktionale Sicherheit von elektrischen Leistungsantriebssystemen mit einstellbarer Drehzahl, beispielsweise Elektromotoren, sind in der Norm EN 61800-5-2 definiert. Dort sind auch Sicherheitsfunktionen zum sicheren Betrieb derartiger Antriebe beschrieben, welche beispielsweise eine sichere Stillstandsüberwachung (SOS, Safe Operating Stop) oder ein sicheres Abschalten des den Antrieb antreibenden Moments (STO, Safe Torque Off) umfassen.

Zur Steuerung eines Elektromotors werden üblicherweise Motorsteuerungen eingesetzt, welche die für den Betrieb des Motors notwendigen Spannungen und Ströme erzeugen. Im Falle eines Synchronmotors erzeugt die Motorsteuerung eine oder mehrere Wechselspannungen, welche an Antriebswicklungen des Motors angelegt werden und ein magnetisches Drehfeld erzeugen, welches einen Rotor des Motors in Bewegung versetzt. Zur Erzeugung der Wechselspannungen weist die Motorsteuerung oft eine Leistungsendstufe mit einem Wechselrichter auf, welcher aus einer Gleichspannung die für den Betrieb des Motors benötigte Wechselspannung erzeugt. Die Drehzahl und das Drehmoment des Elektromotors werden dabei in der Regel über eine Pulsweitenmodulation gesteuert.

Funktionen zum Stillsetzen von Maschinen-Antriebselementen sind in der Norm EN60204-1 kategorisiert. Ein Sillsetzen eines Elektromotors erfolgt in der Regel entweder gesteuert oder ungesteuert. Bei einem gesteuerten Stillsetzen wird der Elektromotor über die Motorsteuerung so angesteuert, dass er zum Stillstand gebracht wird. Erst nach dem Stillstand des Elektromotors wird die Energiezufuhr des Elektromotors gegebenenfalls unterbrochen. Bei einem ungesteuerten Stillsetzen des Elektromotors wird die Energiezufuhr des Elektromotors unterbrochen, ohne diesen vorher gesteuert zum Stillstand zu bringen. Dies erfolgt üblicherweise durch ein sicheres Abschalten der Endstufe der Motorsteuerung. Allerdings kann dabei ein Austrudeln des Motors nach dem Abschalten nicht verhindert werden. Daher werden oft zusätzlich mechanische Betriebsbremsen implementiert, welche den Elektromotor nach Abschalten der Endstufe durch Reibung abbremsen. Die Motorsteuerung und eine Steuerung der mechanischen Bremse wirken dabei zusammen.

Die Druckschriften DE 102 03 374 A1 und DE 102 03 375 A1 offenbaren, einen Elektromotor bei einem Versagen oder Durchrutschen einer mechanischen Feststellbremse während eines Motorstillstands über eine Motorsteuerung dergestalt zu regeln, dass der Elektromotor in Position gehalten wird. Dadurch wird im Wesentlichen eine sichere Stillstandsüberwachung (SOS) realisiert. Allerdings ist eine solche Stillstandsüberwachung nicht mehr möglich, falls ein Defekt an der Motorsteuerung oder an Antriebswicklungen des Elektromotors auftritt. Zudem unterliegen mechanische Feststellbremsen einem verhältnismäßig hohen Verschleiß, was deren Betrieb wartungsintensiv macht.

Aus der Druckschrift DE 10 2004 013 033 B3 ist ein Elektromotor mit einer an dem Motor angeordneten mechanischen Bremse bekannt. Die mechanische Bremse bremst den Motor mittels eines Bremsbelags, welcher durch Federkraft an eine Bremsscheibe angelegt wird. Die Bremse wird elektromagnetisch gelüftet und über eine Steuereinheit kontrolliert. Die Steuereinheit ist zur Spannungsversorgung über Kondensatoren an Antriebsleitungen des Elektromotors angeschlossen. Zum Betrieb des Elektromagneten, der die mechanische Bremse lüftet, ist in der Regel ein hoher Strom notwendig. Die Bremse benötigt daher im Normalbetrieb viel Energie und erzeugt eine große Verlustwärme an dem Elektromotor, was die maximale Motorleistung reduziert. Weiterhin unterliegt auch hier die Bremse einem Verschleiß. Insbesondere führt ein dynamischer Test der Bremse im Betrieb zu Verschleiß. Findet zur Verschleißvermeidung ein Test im Stillstand statt, erfordert dies eine Unterbrechung des Betriebs des Elektromotors und lässt darüber hinaus keine Rückschlüsse auf eine dynamische Belastbarkeit der Bremse zu.

Eine sichere Bremse zum Abbremsen eines Elektromotors kann auch in die Antriebstechnik integriert werden. Derartige Sicherheitsbremsen sind in der Regel in der Motorsteuerung, meist in der Endstufe, implementiert.

Eine sichere Bremse zum Abbremsen eines Elektromotors kann auch in die Antriebstechnik integriert werden. Derartige Sicherheitsbremsen sind in der Regel in der Motorsteuerung, meist in deren Endstufe, implementiert.

Aus der Druckschrift DE 10 2007 059 492 A1 ist ein Elektromotor bekannt, der durch eine Motorsteuerung angesteuert wird. Eine Leistungselektronik der Motorsteuerung umfasst einen Wechselrichter zum Antrieb des Elektromotors. An den Wechselrichter sind Antriebswicklungen des Elektromotors angeschlossen. Der Elektromotor wird über zwei unabhängige Strompfade, welche in die Leistungselektronik der Motorsteuerung integriert sind, generatorisch belastet und dadurch gebremst. Aus der Druckschrift DE 10 2006 047 692 A1 ist bekannt, derartige Strompfade in einer von der Motorsteuerung getrennten Schaltung auszuführen, welche zum Bremsen mit den Antriebswicklungen des Elektromotors elektrisch leitend verbunden wird. In beiden Fällen wird das Bremsmoment über die Antriebswicklungen auf den Elektromotor übertragen, so dass bei einem Defekt der Antriebswicklungen, der Leistungselektronik der Motorsteuerung oder von Verbindungsleitungen zwischen den Antriebswicklungen und den Strompfaden auch kein Abbremsen des Elektromotors mehr möglich ist.

Druckschrift US6525504B1 beschreibt eine Sicherheitsbremse mit den Merkmale des Oberbegriffs des Anspruch 1.

Aufgabe der vorliegenden Erfindung ist es, eine Sicherheitsbremse und ein Verfahren zum Betreiben eines Motorsteuerungssystems anzugeben.

Diese Aufgaben werden durch eine Sicherheitsbremse gemäß Anspruch 1 und ein Verfahren zum Betreiben eines Motorsteuerungssystems gemäß Anspruch 12 gelöst. Weitere vorteilhafte Ausführungen sind jeweils in den abhängigen Ansprüchen angegeben.

Ein Antrieb umfasst zumindest einen Elektromotor und zumindest eine Sicherheitsbremse, wobei der Elektromotor zumindest eine Antriebswicklung zur Beaufschlagung mit einem Antriebssignal umfasst. Weiterhin umfasst der Elektromotor zumindest eine Zusatzwicklung, die mit der Antriebswicklung magnetisch gekoppelt ist. Die Sicherheitsbremse steht mit der Zusatzwicklung elektrisch leitend in Verbindung, um im Betrieb mit der Zusatzwicklung zusammenzuwirken.

Im Betrieb kann die Sicherheitsbremse beispielsweise mit der Zusatzwicklung zusammenwirken, indem die Sicherheitsbremse über die Zusatzwicklung ein an der Antriebswicklung anliegendes Antriebssignal detektiert. Zusätzlich oder alternativ kann die Sicherheitsbremse im Betrieb mit der Zusatzwicklung zusammenwirken, indem die Sicherheitsbremse über die Zusatzwicklung ein Bremsmoment auf den Elektromotor überträgt. Die Sicherheitsbremse kann beispielsweise auch im Betrieb mit der Zusatzwicklung zusammenwirken, indem die Sicherheitsbremse über die Zusatzwicklung mit elektrischer Energie aus dem Antriebssignal versorgt wird.

Indem die Antriebswicklung und die Zusatzwicklung elektrisch getrennt voneinander ausgeführt sind, kann die Sicherheitsbremse unabhängig von den Antriebswicklungen und einer an die Antriebswicklungen angeschlossenen Motorsteuerung betrieben werden. Damit kann die Sicherheitsbremse auch dann noch betrieben werden, wenn ein Defekt der Antriebswicklungen oder der Motorsteuerung auftritt. Beispielsweise kann der Elektromotor abgebremst werden, indem der in der Zusatzwicklung induzierte Strom abgeführt wird.

Bei einer Weiterbildung der Sicherheitsbremse ist die Sicherheitsbremse dazu ausgebildet über die Zusatzwicklung das an der Antriebswicklung anliegende Antriebssignal zu detektieren. Dadurch kann die Sicherheitsbremse als aktive Bremse ausgebildet werden, die den Zustand des Elektromotors überwacht und/oder ein gesteuertes oder geregeltes Bremsmoment auf den Elektromotor überträgt. Bei Vorliegen eines fehlerhaften Antriebssignals oder bei Ausfall des Antriebssignals kann die Sicherheitsbremse beispielsweise selbsttätig den Elektromotor abbremsen. Insbesondere kann das Abbremsen vorteilhafterweise ohne das Einwirken einer übergeordneten Steuereinheit des Antriebs erfolgen.

Bei einer Weiterbildung des Antriebs ist die Sicherheitsbremse dazu ausgebildet, über die Zusatzwicklung ein Bremsmoment auf den Elektromotor zu übertragen. Dadurch kann der Elektromotor vorteilhafterweise kontrolliert zum Stillstand gebracht werden. Indem das Bremsmoment über die Zusatzwicklung auf den Elektromotor übertragen wird, kann die Sicherheitsbremse vorteilhafterweise unabhängig von der Antriebswicklung, einer an die Antriebswicklung angeschlossenen Antriebsleitung und/oder einer die Antriebswicklung beaufschlagenden Motorsteuerung auf den Elektromotor einwirken.

Die Sicherheitsbremse ist dazu ausgebildet, über die Zusatzwicklung mit elektrischer Energie aus dem Antriebssignal versorgt zu werden. Indem die Sicherheitsbremse über die Zusatzwicklung mit elektrischer Energie versorgt wird, kann die Sicherheitsbremse vorteilhafterweise als aktive Bremse ohne eine eigene externe Energieversorgung betrieben werden. Die Sicherheitsbremse kann beispielsweise eine Energiespeichereinrichtung, etwa einen oder mehrere Kondensatoren, aufweisen, um die elektrische Energie aus der Zusatzwicklung zu speichern. Damit kann der Betrieb der Sicherheitsbremse auch nach einem Ausfall des Antriebssignals aufrechterhalten werden.

Bei einer Weiterbildung des Antriebs ist die Sicherheitsbremse dazu ausgebildet, eine Abweichung einer Taktfrequenz des Antriebssignals von einer Solltaktfrequenz und/oder eine Abweichung eines Spannungswerts des Antriebssignals von einem Sollspannungswert zu detektieren. Dadurch ist es auf vorteilhaft einfache Weise möglich, ein fehlerhaftes Antriebssignal zu detektieren.

Die Sicherheitsbremse weist jeweils zumindest einen Gleichrichter, einen Zwischenkreis und eine Kontrolleinrichtung zur Steuerung der Sicherheitsbremse auf. Der Zwischenkreis ist über den Gleichrichter an die Zusatzwicklung angeschlossen und führt eine Zwischenkreisspannung. Der Gleichrichter ist dazu ausgebildet, durch Gleichrichtung einer an der Zusatzwicklung abfallenden Spannung die Zwischenkreisspannung zu erzeugen. Die Sicherheitsbremse ist weiterhin dazu ausgebildet, die Kontrolleinrichtung über den Zwischenkreis mit der Zwischenkreisspannung zu versorgen.

Die Kontrolleinrichtung der Sicherheitsbremse kann beispielsweise dazu ausgebildet sein, ein auf den Elektromotor wirkendes Bremsmoment, welches durch die Sicherheitsbremse erzeugt wird, zu steuern oder zu regeln. Der an die Zusatzwicklung angeschlossene Zwischenkreis ermöglicht eine besonders einfache Spannungsversorgung der Kontrolleinrichtung mit elektrischer Energie aus der Zusatzwicklung. Um die Zwischenkreisspannung zu erzeugen, kann die von dem Gleichrichter gleichgerichtete, an der Zusatzwicklung abfallende Spannung auch zunächst geringer als die Zwischenkreisspannung sein und anschließend auf die Zwischenkreisspannung transformiert werden.

Bei einer Weiterbildung des Antriebs umfasst die Sicherheitsbremse zumindest eine Antriebssensoreinrichtung, welche dazu ausgebildet ist, über die Zusatzwicklung das an der Antriebswicklung anliegende Antriebssignal zu erfassen. Die Antriebssensoreinrichtung ist dabei dazu ausgebildet, ein dem Antriebssignal entsprechendes Antriebsmesssignal an die Kontrolleinrichtung zu übertragen. Dadurch kann die Kontrolleinrichtung vorteilhafterweise den Betriebszustand des Elektromotors selbsttätig erfassen und beispielsweise bei einem fehlerhaften Betriebszustand, etwa bei einem Ausbleiben des Antriebssignals, ein sicheres Abbremsen des Elektromotors bewirken.

Bei einer Weiterbildung des Antriebs umfasst die Sicherheitsbremse zumindest eine Energieaufnahmevorrichtung, welche an den Zwischenkreis angeschlossen ist. Dadurch kann vorteilhafterweise ein Abbremsen des Elektromotors dadurch bewirkt werden, dass dem Zwischenkreis durch die Energieaufnahmevorrichtung elektrische Energie entzogen wird. Bei der Energieaufnahmevorrichtung kann es sich beispielsweise um einen Energiespeicher, beispielsweise einen Kondensator, oder einen elektrischen Widerstand handeln, über den die Zwischenkreisspannung abfällt.

Bei einer Weiterbildung des Antriebs umfasst die Energieaufnahmevorrichtung zumindest einen Lastwiderstand und zumindest eine Lastschalteinrichtung, wobei der Lastwiderstand über die Lastschalteinrichtung mit dem Zwischenkreis verbunden ist. Weiterhin ist die Sicherheitsbremse dazu ausgebildet, dass die Lastschalteinrichtung über die Kontrolleinrichtung gesteuert wird. Über den Lastwiderstand kann beispielsweise die Zwischenkreisspannung abfallen. Mittels der Lastschalteinrichtung kann vorteilhafterweise der Stromfluss durch den Lastwiderstand gesteuert werden, um die Energie, die dem Zwischenkreis von der Energieaufnahmeeinrichtung entzogen wird, zu kontrollieren.

Die Sicherheitsbremse umfasst zumindest einen Hochsetzsteller, welcher zwischen dem Gleichrichter und zumindest einem Zwischenkreiskondensator des Zwischenkreises angeordnet ist. Der Hochsetzsteller umfasst zumindest eine Kurzschlussschalteinrichtung, wobei die Kurzschlussschalteinrichtung so mit einer Gleichspannungsseite des Gleichrichters verbunden ist, dass die Gleichspannungsseite über die Kurzschlussschalteinrichtung kurzgeschlossen werden kann. Die Sicherheitsbremse ist dazu ausgebildet, dass die Kurzschlussschalteinrichtung über die Kontrolleinrichtung gesteuert werden kann.

Falls der Betrag einer durch eine Drehung des Motors in der Zusatzwicklung induzierten Spannung kleiner ist als die Zwischenkreisspannung, ermöglicht es der Hochsetzsteller vorteilhafterweise, die an der Zusatzwicklung des Elektromotors abfallende und an der Gleichspannungsseite des Gleichrichters anliegende Spannung auf die Zwischenkreisspannung zu transformieren. Durch eine Steuerung der Kurzschlussschalteinrichtung durch die Kontrolleinrichtung der Sicherheitsbremse kann vorteilhafterweise das Bremsmoment auf den Elektromotor, welches durch einen Energiefluss aus der Zusatzwicklung in den Zwischenkreis erzeugt wird, kontrolliert werden.

Bei einer Weiterbildung des Antriebs ist die Sicherheitsbremse dazu ausgebildet, dass die Kontrolleinrichtung über zumindest ein an den Zwischenkreis angeschlossenes Netzteil der Sicherheitsbremse mit elektrischer Energie versorgt wird. Hierdurch ist es auf vorteilhaft einfache Weise möglich, eine Versorgung der Kontrolleinrichtung über die Zwischenkreisspannung zu realisieren. Beispielsweise können Schwankungen der Zwischenkreisspannung durch das Netzteil ausgeglichen werden.

Bei einer Weiterbildung des Antriebs umfasst die Sicherheitsbremse zumindest eine Strommesseinrichtung, welche dazu ausgebildet ist, einen durch den Gleichrichter fließenden Gleichrichterstrom zu messen und ein Gleichrichterstromsignal an die Kontrolleinrichtung zu übertragen. Über das Gleichrichterstromsignal kann beispielsweise ein Motorbremsstrom bestimmt werden, welcher das auf den Elektromotor übertragene Bremsmoment festlegt. Indem die Kontrolleinrichtung den Gleichrichterstrom erfasst, wird vorteilhafterweise ein geregeltes Abbremsen des Elektromotors ermöglicht.

Bei einer Weiterbildung des Antriebs umfasst die Sicherheitsbremse eine Spannungsmesseinrichtung, welche dazu ausgebildet ist, eine Zwischenkreisspannung zu messen und ein Zwischenkreisspannungssignal an die Kontrolleinrichtung zu übertragen. Das von der Kontrolleinrichtung erfasste Zwischenkreisspannungssignal kann vorteilhafterweise dazu verwendet werden, die Zwischenkreisspannung zu stabilisieren. Ein Motorsteuerungssystem weist zumindest einen Antrieb, zumindest eine Motorsteuerung, zumindest eine übergeordnete Steuereinheit und zumindest ein Datenübertragungsmedium auf. Das Datenübertragungsmedium verbindet die Motorsteuerung mit der übergeordneten Steuereinheit und der Sicherheitsbremse des Antriebs. Die Motorsteuerung ist mit der Antriebswicklung des Elektromotors verbunden und dazu ausgebildet, die Antriebswicklung mit einem Antriebssignal zu beaufschlagen. Die übergeordnete Steuereinheit ist dazu ausgebildet, über das Datenübertragungsmedium Kommunikationsdaten mit der Motorsteuerung und der Sicherheitsbremse des Antriebs auszutauschen.

Da die Sicherheitsbremse des Antriebs über die Zusatzwicklung aus dem an dem Elektromotor anliegenden Antriebssignal oder aus einer durch die Bewegung des Elektromotors erzeugten Induktionsspannung mit elektrischer Energie versorgt werden kann, kann die Sicherheitsbremse des Antriebs vorteilhafterweise selbsttätig und unabhängig von der Motorsteuerung betrieben werden. Damit ist ein Abbremsen des Elektromotors auch bei einem Ausfall der Motorsteuerung noch möglich. Über das Datenübertragungsmedium ist vorteilhafterweise eine Kommunikation zwischen der übergeordneten Steuereinheit und der Sicherheitsbremse möglich, beispielsweise um einen von der Sicherheitsbremse detektierten Stillstand des Elektromotors zu erfassen.

Bei einer Weiterbildung des Motorsteuerungssystems umfasst der Antrieb zumindest eine Gebereinheit, welche an dem Elektromotor angeordnet und mit der Motorsteuerung über zumindest eine Geberleitung verbunden ist. Die Gebereinheit ist dazu ausgebildet, eine Bewegung des Elektromotors zu erfassen und die Bewegung des Elektromotors über die Geberleitung an die Motorsteuerung zurückzumelden. Das Datenübertragungsmedium verbindet die Motorsteuerung und die Sicherheitsbremse über die Geberleitung miteinander.

Indem der zu der Sicherheitsbremse führende Teil des Datenübertragungsmediums in die Geberleitung integriert wird, wird eine vorteilhaft einfache Verkabelung des Antriebs ermöglicht. Die Motorsteuerung kann beispielsweise dazu ausgebildet sein, die von der Sicherheitsbremse gesendeten Steuerdaten über ein Sicherheitsmodul zu empfangen und an die übergeordnete Steuereinheit zu übertragen, so dass eine sichere Datenverbindung zwischen der Sicherheitsbremse und der übergeordneten Steuereinheit realisiert werden kann.

Ein Verfahren zum Betreiben eines Motorsteuerungssystems umfasst als einen Verfahrensschritt eine Beaufschlagung der Antriebswicklung des Elektromotors mit einem von der Endstufe der Motorsteuerung erzeugten Antriebssignal. Als weiteren Schritt umfasst das Verfahren eine Detektion des an der Antriebswicklung anliegenden Antriebssignals über die Zusatzwicklung durch die Sicherheitsbremse.

Indem die Sicherheitsbremse das an der Antriebswicklung anliegende Antriebssignal detektiert, kann durch die Sicherheitsbremse vorteilhafterweise eine fehlerfreie Funktion der Motorsteuerung überwacht werden. Handelt es sich bei dem Antriebssignal um ein pulsweitenmoduliertes Antriebssignal, kann die Sicherheitsbremse die Funktion der Motorsteuerung beispielsweise überwachen, indem sie eine Signalkomponente in den Zusatzwicklungen detektiert, die mit einer Taktfrequenz des pulsweitenmodulierten Signals moduliert ist. Da die Sicherheitsbremse das Antriebssignal über die mit der Antriebswicklung magnetisch gekoppelten Zusatzwicklung detektiert, wird zusätzlich zur Funktion der Motorsteuerung auch eine fehlerfreie Funktion der Antriebswicklung und einer Antriebsleitung zwischen Motorsteuerung und Antriebswicklung überwacht.

Eine Weiterbildung des Verfahrens zum Betreiben des Motorsteuerungssystems umfasst als einen zusätzlichen Verfahrensschritt eine Aktivierung einer Sicherheitsstopfunktion der Motorsteuerung durch die übergeordnete Steuereinheit. Als weiteren Verfahrensschritt umfasst die Weiterbildung des Verfahrens eine Freigabe einer Endstufe der Motorsteuerung. Ein weiterer Verfahrensschritt umfasst einen Aufbau einer Datenverbindung zwischen der Sicherheitsbremse und der übergeordneten Steuereinheit über das Datenübertragungsmedium. Als weiteren Schritt umfasst die Weiterbildung des Verfahrens eine Deaktivierung der Sicherheitsstopfunktion der Motorsteuerung durch die übergeordnete Steuereinheit. Dabei umfasst die Sicherheitsstopfunktion eine Übertragung eines Sicherheitsstop-Antriebssignals an die Antriebswicklung und der Elektromotor des Antriebs wird durch das Sicherheitsstop-Antriebssignal in einer sicheren Stellung gehalten. Die Sicherheitsbremse des Antriebs detektiert das Sicherheitsstop-Antriebssignal über die Zusatzwicklung des Elektromotors.

Das Sicherheitsstop-Antriebssignal kann beispielsweise ein pulsweitenmoduliertes Antriebssignal sein. Falls der Elektromotor die sichere Stellung ohne anliegendes Drehmoment halten kann, kann das Sicherheitsstop-Antriebssignal eine Amplitude und/oder Phasenlage aufweisen, welche kein Drehmoment oder ein zu vernachlässigendes Drehmoment in dem Elektromotor erzeugen. Beispielsweise kann das Sicherheitsstop-Antriebssignal lediglich flussbildende und keine drehmomentbildende Ströme in der Antriebswicklung erzeugen. Wird ein Drehmoment benötigt, um den Elektromotor in der sicheren Stellung zu halten, etwa um ein äußeres Drehmoment auf den Motor zu kompensieren, kann das Sicherheitsstop-Antriebssignal dazu ausgelegt sein, ein das äußere Drehmoment kompensierendes Drehmoment zu erzeugen, so dass der Elektromotor in der sicheren Stellung gehalten wird.

Das Sicherheitsstop-Antriebssignal kann auch als ein alternierendes Antriebssignal ausgebildet sein, welches eine Wechselspannung an den Antriebswicklungen erzeugt, welche sich im zeitlichen Mittel aufhebt und aufgrund der Massenträgheit des Elektromotors zu keiner Bewegung des Elektromotors führt.

Ist die Sicherheitsbremse dazu ausgebildet, aus dem Antriebssignal mit elektrischer Energie versorgt zu werden, ermöglicht es das Sicherheitsstop-Antriebssignal, die Sicherheitsbremse auch bei Stillstand des Elektromotors mit Energie zu versorgen.

Über eine Spannung, die durch das Sicherheitsstop-Antriebssignal in der Zusatzwicklung erzeugt wird, kann die Sicherheitsbremse vorteilhafterweise die fehlerfreie Funktion der Motorsteuerung erkennen. Die übergeordnete Steuerung kann beispielsweise derart ausgelegt sein, dass sie die Motorsteuerung erst dann dazu anweist, die Sicherheitsstopfunktion zu deaktivieren, wenn die Datenverbindung zwischen der Sicherheitsbremse und der übergeordneten Steuerung aufgebaut worden ist. Zusätzlich kann die Sicherheitsbremse vor Beenden der Sicherheitsstopfunktion einen Selbsttest ausführen und eine fehlerfreie Funktion über die Datenverbindung an die übergeordnete Steuerung zurückmelden. Hierdurch kann sicher gewährleistet werden, dass der Elektromotor erst dann aus der sicheren Stellung heraus in Bewegung gesetzt wird, wenn alle Komponenten des Motorsteuerungssystems betriebsbereit sind.

Die Erfindung wird im Folgenden anhand von Figuren näher erläutert. Dabei zeigen in jeweils schematischer Darstellung:
- Fig. 1: ein Motorsteuerungssystem mit einem Antrieb mit einem Elektromotor und einer Sicherheitsbremse;
- Fig. 2: einen Prinzipschaltplan eines Antriebs mit einem Elektromotor und einer Sicherheitsbremse; und
- Fig. 3: ein weiteres Motorsteuerungssystem mit einem weiteren Antrieb mit einem weiteren Elektromotor und einer weiteren Sicherheitsbremse.

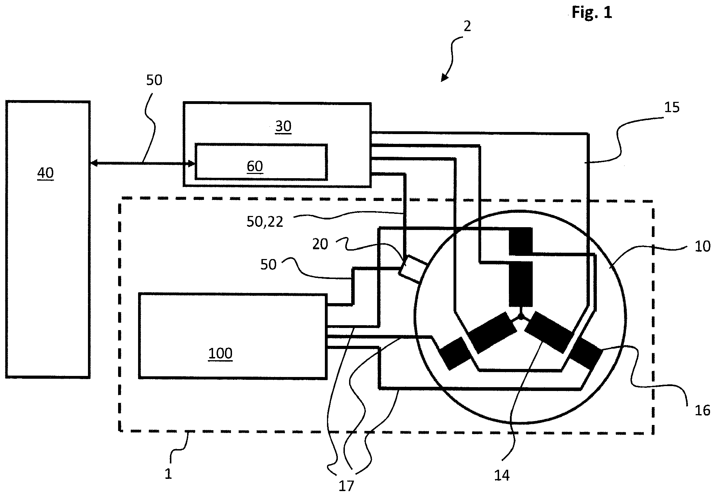

Figur 1 zeigt ein Motorsteuerungssystem 2 mit einem Antrieb 1, welcher einen Elektromotor 10 und eine Sicherheitsbremse 100 umfasst. Der Elektromotor 10 weist eine Antriebswicklung 14 auf, die von einer Motorsteuerung 30 über eine elektrische Antriebsleitung 15 mit einem Antriebssignal, beispielsweise einem geregelten Spannungs- oder Stromsignal, beaufschlagt wird. Die Antriebswicklung 14 kann beispielsweise an einem Stator des Elektromotors 10 angeordnet sein. Das Antriebssignal erzeugt in der Antriebswicklung 14 ein Magnetfeld, welches den Elektromotor 10 in Bewegung versetzt, indem es mit einem magnetischen Element des Elektromotors 10, beispielsweise einem Permanentmagneten oder einem Spulen aufweisenden Erregersystem, wechselwirkt. Ist die Antriebswicklung 14 an dem Stator des Elektromotors 10 angeordnet, so kann das magnetische Element beispielsweise an einem beweglichen Rotor des Elektromotors 10 angeordnet sein. Alternativ sind auch eine Anordnung der Antriebswicklung 14 an dem Rotor und eine Anordnung des magnetischen Elements an dem Stator möglich.

Der Elektromotor 10 kann zum Beispiel ein Synchronmotor sein. Insbesondere kann es sich bei dem Elektromotor 10, wie in Figur 1 angedeutet, um einen Drehstrom-Synchronmotor handeln. In diesem Fall weist der Elektromotor 10 drei Antriebswicklungen 14 auf, die um 120° versetzt angeordnet sind und mit jeweils um 120° phasenverschobenen Antriebssignalen beaufschlagt werden. Der Rotor des Elektromotors 10 kann beispielsweise einen oder mehrere Permanentmagnete aufweisen, im Falle eines Drehstrom-Synchronmotors weist er insgesamt einen magnetischen Nordpol und einen magnetischen Südpol auf. Alternativ kann es sich bei dem Elektromotor 10 auch um einen Synchronmotor mit beispielsweise zwei Phasen oder mehr als drei Phasen handeln.

An dem Elektromotor 10 ist eine Gebereinheit 20 angeordnet, welche eine Bewegung des Elektromotors 10 erfasst und ein die Bewegung repräsentierendes Gebersignal über eine Geberleitung 22 an die Motorsteuerung 30 sendet. Die Rückmeldung der Bewegung des Elektromotors 10 an die Motorsteuerung 30 über die Gebereinheit 20 erlaubt eine Regelung der Bewegung des Elektromotors 10 über einen geschlossenen Regelkreis. Der Elektromotor 10 weist eine Zusatzwicklung 16 auf, welche mit der Antriebswicklung 14 magnetisch gekoppelt ist. In Folge der magnetischen Kopplung induziert ein in der Antriebswicklung 14 erzeugtes, zeitlich veränderliches Magnetfeld ein elektrisches Feld und damit einen Stromfluss in der Zusatzwicklung 16 und umgekehrt. Dadurch steht auch die Zusatzwicklung 16 mit dem magnetischen Element, welches zusammen mit der Antriebswicklung 14 für die Bewegung des Elektromotors 10 sorgt, in magnetischer Wechselwirkung.

Die magnetische Kopplung zwischen Antriebswicklung 14 und Zusatzwicklung 16 kann beispielsweise dadurch erreicht werden, dass die Antriebswicklung 14 und die Zusatzwicklung 16 um einen gemeinsamen Anker oder Eisenkern gewickelt sind. Der in Figur 1 dargestellte Elektromotor 10 weist jeweils eine Zusatzwicklung 16 für jede der drei Antriebswicklungen 14 auf, wobei die Zusatzwicklung 16 und die zugehörige Antriebswicklung 14 jeweils magnetisch gekoppelt sind.

Die Zusatzwicklungen 16 sind über elektrische Bremsleitungen 17 mit der Sicherheitsbremse 100 verbunden. Handelt es sich bei dem Elektromotor 10 um einen Drehstrom-Synchronmotor, so sind die Zusatzwicklungen 16, wie in Figur 1 dargestellt, in einer Sternschaltung miteinander verbunden und die jeweils freien Enden der Zusatzwicklungen 16 sind mit der Sicherheitsbremse 100 verbunden.

Für die vorliegende Erfindung sind die Zahl der Antriebswicklungen bzw. der Phasen des Elektromotors 10, die Art der magnetischen Erregung oder die Anordnung der Antriebswicklungen 14 des Elektromotors 10 nicht entscheidend. Lediglich das mit der Antriebswicklung 14 und der Zusatzwicklung 16 wechselwirkende magnetische Element des Elektromotors 10 muss eine dauerhafte magnetische Erregung aufweisen.

Das Motorsteuerungssystem 2 weist eine übergeordnete Steuereinheit 40 auf. Bei der übergeordneten Steuereinheit 40 kann es sich um eine programmierbare Steuerung, etwa eine speicherprogrammierbare Steuerung oder einen Industrie-PC, handeln. Die übergeordnete Steuereinheit 40 kann als Sicherheitssteuerung ausgelegt sein und sicherheitsrelevante Steuerfunktionen in dem Motorsteuerungssystem 2 übernehmen. Dazu kann die übergeordnete Steuereinheit 40 spezielle sichere Hard- und Software umfassen, welche beispielsweise redundant ausgeführt ist.

Die übergeordnete Steuereinheit 40 kann dazu ausgebildet sein, neben sicherheitsrelevanten Steuerfunktionen auch gewöhnliche Steuerfunktionen auszuführen, welche über die Motorsteuerung 30 den Elektromotor 10 steuern. Hierzu kann die übergeordnete Steuereinheit 40 Steuerbefehle an die Motorsteuerung 30 senden, welche das auszugebende Antriebssignal beeinflussen. Alternativ können die gewöhnlichen Steuerfunktionen auch von einer weiteren Steuereinheit ausgeführt werden.

Das Motorsteuerungssystem 2 umfasst ein Datenübertragungsmedium 50. Über das Datenübertragungsmedium 50 kann die übergeordnete Steuereinheit 40 Kommunikationsdaten mit der Motorsteuerung 30 und der Sicherheitsbremse 100 austauschen. Die Kommunikationsdaten können Messwerte, Statusmeldungen und Steuerbefehle umfassen, welche zur Ausführung der sicherheitsrelevanten Steuerfunktionen benötigt werden. Gegebenenfalls können die Kommunikationsdaten Steuerbefehle zur Ausführung der gewöhnlichen Steuerfunktionen umfassen.

Die Motorsteuerung 30 umfasst ein Sicherheitsmodul 60, mit welchem die übergeordnete Steuereinheit 40 kommuniziert, um die zur Ausführung der sicherheitsrelevanten Steuerfunktionen notwendigen Kommunikationsdaten auszutauschen. Das Sicherheitsmodul 60 steuert Funktionen der Motorsteuerung 30, die für die funktionale Sicherheit des Motorsteuerungssystems 2 relevant sind. Dabei kann es sich zum Beispiel um die Überwachung einer Endstufe der Motorsteuerung 30 oder eine Überwachung der Bewegung des Elektromotors 10, beispielsweise mithilfe der Gebereinheit 20, handeln. Bei Auftreten eines sicherheitsrelevanten Fehlers kann das Sicherheitsmodul 60 die Endstufe der Motorsteuerung 30 sperren und so den Elektromotor 10 momentenfrei schalten.

Im in Figur 1 dargestellten Ausführungsbeispiel verbindet das Datenübertragungsmedium 50 die Sicherheitsbremse 100 über die Gebereinheit 20 und die Motorsteuerung 30 mit der übergeordneten Steuereinheit 40. Das Motorsteuerungssystem 2 kann derart ausgebildet sein, dass die Sicherheitsbremse 100 Kommunikationsdaten nur mit der übergeordneten Steuereinheit 40 austauscht. Die Gebereinheit 20 und die Motorsteuerung 30 leiten entsprechende Kommunikationsdaten in solch einem Fall lediglich weiter, ohne diese selbst zu bearbeiten. Die Weiterleitung der Kommunikationsdaten in der Motorsteuerung 30 kann beispielsweise über das Sicherheitsmodul 60 erfolgen.

Zwischen der Gebereinheit 20 und der Motorsteuerung 30 kann das Datenübertragungsmedium 50 als separate Leitung ausgeführt oder, wie in Figur 1 angedeutet, mit der Geberleitung 22 zusammengefasst sein. Dabei können die zwischen Sicherheitsbremse 100 und übergeordneter Steuereinheit 30 auszutauschenden Kommunikationsdaten auf von der Geberleitung 22 getrennten Adern einer mehradrigen elektrischen Leitung übermittelt werden. Die Gebereinheit 20 kann die zwischen der Sicherheitsbremse 100 und übergeordneten Steuerung 40 auszutauschenden Kommunikationsdaten auch in Kommunikationsdaten integrieren, die das Gebersignal an die Motorsteuerung 30 übermitteln. In solch einem Fall werden für das Datenübertragungsmedium 50 neben der Geberleitung 22 keine zusätzlichen Adern oder Leitungen zwischen Gebereinheit 20 und Motorsteuerung 30 benötigt. Wird dabei auf dem in die Geberleitung 22 integrierten Teil des Datenübertragungsmediums 50 eine andere Übertragungstechnik verwendet als auf dem übrigen Teil des Datenübertragungsmediums 50, kann das Sicherheitsmodul 60 dazu ausgebildet sein, eine Umsetzung der Kommunikationsdaten durchzuführen.

Alternativ können die Sicherheitsbremse 100 und die übergeordnete Steuereinheit 40 auch direkt über einen Teil des Datenübertragungsmediums 50 miteinander verbunden werden, welcher nicht über die Gebereinheit 20 und/oder die Motorsteuerung 30 verläuft.

Das Datenübertragungsmedium 50 kann als ein Netzwerkkabel, etwa als Ethernet-Kabel, ausgebildet sein. Bei den Kommunikationsdaten, die die Sicherheitsbremse 100 mit der übergeordneten Steuereinheit 40 austauscht, kann es sich um Kommunikationsdaten zur Ausführung sicherheitsrelevanter Steuerfunktionen handeln. Daher kann für die Kommunikation über das Datenübertragungsmedium 50 ein sichereres Datenübertragungsprotokoll eingesetzt werden, so dass die Kommunikation zwischen der übergeordneten Steuereinheit 40 und dem Sicherheitsmodul 60 der Motorsteuerung und zwischen der übergeordneten Steuereinheit 40 und der Sicherheitsbremse 100 einer geforderten Sicherheitsanforderungsstufe genügt.

Die Kommunikation kann beispielsweise auf dem EtherCAT-Standard basieren und als sicheres Datenübertragungsprotokoll kann beispielsweise "Safety over EtherCAT" (Fail Safe over EtherCAT, FSoE) eingesetzt werden, wie es in der Norm IEC 61784-3-12 beschrieben ist. Der Einsatz des FSoE-Datenübertragungsprotokolls ermöglicht eine sichere Übertragung von Kommunikationsdaten, welche alleine auf Sicherheitsmerkmalen (etwa Prüfsummen oder Sequenzzähler) des Datenübertragungsprotokolls selbst basiert und nicht auf einer Absicherung des Datenübertragungsmediums auf physikalischer Ebene beruht. Dies erleichtert eine in die Geberleitung 22 integrierte Ausführung des Datenübertragungsmediums 50 zwischen Gebereinheit 20 und Motorsteuerung 30.

Eine Steuerung des Elektromotors 10 durch die Motorsteuerung 30 kann über eine Pulsweitenmodulation des Antriebssignals erfolgen. Dabei wird zur Variation der Geschwindigkeit und des Drehmoments des Elektromotors 10 der Tastgrad eines periodischen Rechteckpulssignals variiert. Handelt es sich bei dem Elektromotor 10 um einen Drehstrom-Synchronmotor, werden drei an den Antriebswicklungen anliegende Antriebssignale so moduliert, dass sich im zeitlichen Mittel das für den Antrieb des Elektromotors 10 benötigte Drehfeld ergibt.

Die Sicherheitsbremse 100 wird über eine in den Zusatzwicklungen 16 induzierte elektrische Spannung mit elektrischer Energie versorgt. Da die Zusatzwicklungen 16 magnetisch mit den Antriebswicklungen 14 gekoppelt sind, kann die elektrische Spannung beispielsweise durch ein in den Antriebswicklungen 14 vorliegendes, pulsweitenmoduliertes Antriebssignal induziert werden. In den Zusatzwicklungen 16 stellt sich dann eine Spannung ein, die proportional zur Spannung in den Antriebswicklungen 14 ist.

Solange sich der Elektromotor 10 dreht, induzieren dessen magnetische Elemente zur Wechselwirkung mit dem Magnetfeld der Antriebswicklungen 14, beispielsweise dessen Permanentmagnete, eine Spannung in den Zusatzwicklungen 16. Dadurch kann die Sicherheitsbremse 100 auch ohne ein an den Antriebswicklungen 14 anliegendes Antriebssignal mit elektrischer Energie aus den Zusatzwicklungen 16 versorgt werden.

Zur Versorgung der Sicherheitsbremse 100 mit elektrischer Energie ist nicht unbedingt eine Bewegung des Elektromotors 10 notwendig. Beispielsweise können an den Antriebswicklungen 14 auch im Stillstand des Motors Stillstand-Antriebssignale anliegen, die in einer derartigen Weise pulsweitenmoduliert sind, dass sich kein für den Antrieb des Elektromotors 10 geeignetes Drehfeld ergibt. Derartige Stillstand-Antriebssignale erzeugen in den Antriebswicklungen 14 lediglich flussbildende, nicht jedoch drehmomentbildende Stromkomponenten. Eine Raumzeigerdarstellung der Ströme dieser Stillstand-Antriebssignale in einem rotorfesten Koordinatensystem (d/q-Koordinaten) weist damit lediglich flussbildende Stromkomponenten (d-Ströme) und keine drehmomentbildenden Stromkomponenten (q-Ströme) auf. Ein derartiges Stillstand-Antriebssignal kann beispielsweise Ströme in den Antriebswicklungen 14 erzeugen, deren resultierendes Magnetfeld parallel oder antiparallel zur Magnetachse des Rotors des Elektromotors 10 ausgerichtet ist. Darüber hinaus kann ein Stillstand-Antriebssignal, welches bei Stillstand des Elektromotors 10 die Sicherheitsbremse 100 mit Energie versorgt, auch eine Wechselspannung über den Antriebswicklungen 14 erzeugen, also die magnetische Erregung des Stators des Elektromotors 10 periodisch umkehren. Beispielsweise kann mit der Frequenz der Pulsweitenmodulation jeweils abwechselnd ein positiver und negativer Spannungspuls ausgegeben werden, so dass die Wiederholfrequenz der Wechselspannung der halben Pulsweitenmodulationsfrequenz entspricht. Dabei wird die Spannung über die Antriebswicklungen 14 in so schneller Folge periodisch umgekehrt, dass sich der Elektromotor 10 aufgrund seiner Massenträgheit nicht in Bewegung setzt, selbst wenn das Stillstand-Antriebssignal drehmomentbildende Anteile aufweist.

Eine solche Wechselspannung oder ein rein flussbildendes Stillstand-Antriebssignal kann auch zusätzlich zu und/oder unabhängig von dem Antriebssignal, den Elektromotor 10 in Bewegung versetzt, an die Antriebswicklungen 14 angelegt werden. Beispielsweise kann das Stillstand-Antriebssignal kontinuierlich während des Betriebes des Elektromotors 10 in der Motorsteuerung 30 auf das Antriebssignal aufmoduliert werden.

Die Sicherheitsbremse 100 ist weiterhin dazu ausgebildet, das an den Antriebswicklungen 14 anliegende Antriebssignal über die Zusatzwicklungen 16 zu detektieren. Hierzu wird ein elektrisches Signal, welches von dem Antriebssignal über die Antriebswicklungen 14 in den Zusatzwicklungen 16 induziert wird, von der Sicherheitsbremse 100 erfasst und verarbeitet. Die Sicherheitsbremse 100 kann dadurch Fehler in dem Antriebssignal erkennen und bei Vorliegen von Fehlern eine Bremsung des Elektromotors 10 veranlassen.

Ein Fehler kann beispielweise in einer Abweichung eines Spannungswerts, zum Beispiel der Pulsspannung bei einem pulsweitenmodulierten Antriebssignal, von einem Sollspannungswert liegen. Ebenso kann das Ausbleiben des Antriebssignals, beispielsweise aufgrund eines Defekts der Motorsteuerung 30, der Antriebsleitungen 15 oder der Antriebswicklungen 14, einen Fehler darstellen. Bei einem pulsweitenmodulierten Antriebssignal kann das Ausbleiben des Antriebssignals durch die Sicherheitsbremse 100 dadurch detektiert werden, dass die in den Zusatzwicklungen 16 induzierten Spannungen keine Modulation mit der Taktfrequenz der Pulsweitenmodulation mehr aufweisen.

Die Sicherheitsbremse 100 ist dazu ausgebildet, den Elektromotor 10 im Falle einer Störung über die Zusatzwicklungen 16 abzubremsen. Hierzu wird der Elektromotor 10 über die Zusatzwicklungen 16 generatorisch belastet und ein in den Zusatzwicklungen 16 durch die Bewegung des Elektromotors 10 induzierter Strom wird durch die Sicherheitsbremse 100 abgeführt und beispielsweise in Wärme umgewandelt oder gespeichert. Der in den Zusatzwicklungen 16 induzierte Strom kann dabei durch die magnetischen Elemente erzeugt werden, die auch mit den Antriebswicklungen 14 magnetisch wechselwirken, um den Elektromotor 10 anzutreiben.

Das Abführen der elektrischen Energie kann durch die Sicherheitsbremse 100 aktiv gesteuert oder geregelt werden, so dass der Elektromotor 10 gesteuert oder geregelt zum Stillstand gebracht werden kann. Um eine Energieversorgung der Sicherheitsbremse 100 auch nach dem Stillstand des Elektromotors 10 noch aufrechterhalten zu können, kann ein Teil der aus den Zusatzwicklungen 16 abgeführten elektrischen Energie in der Sicherheitsbremse 100 gespeichert werden.

Die Sicherheitsbremse 100 kann damit sowohl selbsttätig einen Fehler des Antriebssignals in den Antriebswicklungen 14 erkennen, als auch den Elektromotor 10 selbsttätig abbremsen. Damit ist die Sicherheitsbremse 100 grundsätzlich unabhängig von der übergeordneten Steuereinheit 40 und der Motorsteuerung 30.

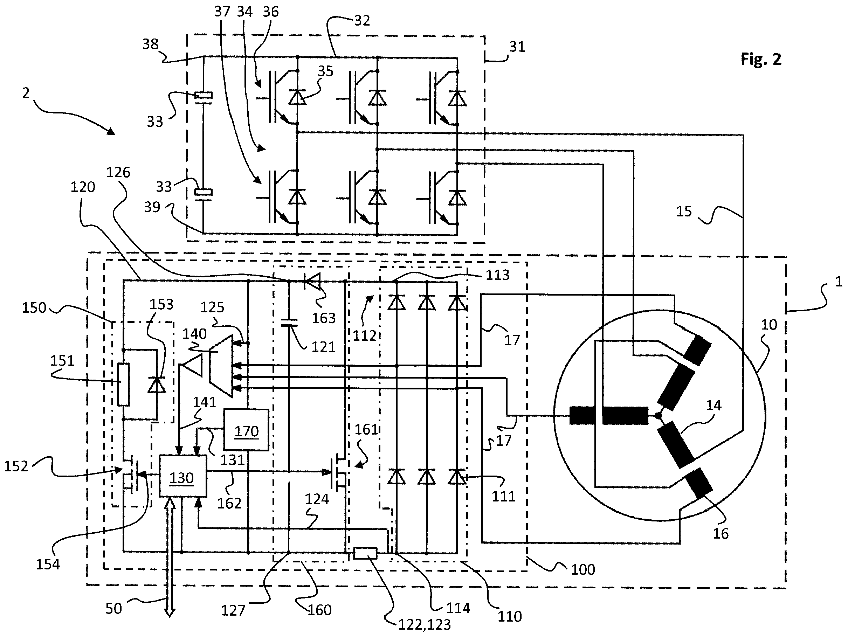

Figur 2 zeigt einen Prinzipschaltplan des Antriebs 1 des Motorsteuerungssystems 2. Dargestellt sind die Sicherheitsbremse 100, der Elektromotor 10 und eine Endstufe 31 der Motorsteuerung 30. Die Endstufe 31 ist als Wechselrichter ausgeführt und umfasst einen Endstufenzwischenkreis 32 und drei Endstufen-Halbbrücken 34. Die Endstufen-Halbbrücken 34 weisen jeweils einen oberen Endstufentransistor 36 und einen unteren Endstufentransistor 37 auf. Jeweils eine der Endstufen-Halbbrücken 34 verbindet jeweils eine der Antriebsleitungen 15 mit dem Endstufenzwischenkreis 32. Dabei ist die jeweilige Antriebsleitung 15 über den oberen Endstufentransistor 36 mit einem oberen Potentialpunkt 38 des Endstufenzwischenkreises 32 und über den unteren Endstufentransistor 37 mit einem unteren Potentialpunkt 39 des Endstufenzwischenkreises 32 verbunden.

Der Endstufenzwischenkreis 32 führt eine Gleichspannung, welche durch eine zwischen dem oberen und dem unteren Potentialpunkt 38, 39 des Endstufenzwischenkreises 32 befindliche Anordnung aus zwei Endstufenzwischenkreiskondensatoren 33 aufrechterhalten wird. Die Endstufenzwischenkreiskondensatoren 33 sind zwischen dem oberen Potentialpunkt 38 und dem unteren Potentialpunkt 39 des Endstufenzwischenkreises 32 in Reihe geschaltet. Parallel zu jedem der oberen Endstufentransistoren 36 und jedem der unteren Endstufentransistoren 37 ist jeweils eine Freilaufdiode 35 angeordnet, wobei die Gleichspannung des Endstufenzwischenkreises 32 jeweils in Sperrrichtung über die Freilaufdiode 35 abfällt.

Mittels der Endstufen-Halbbrücken 34 kann ein pulsweitenmoduliertes dreiphasiges Antriebssignal an die Antriebswicklungen 14 angelegt werden. Hierzu werden die Antriebsleitungen 15 jeweils kurzzeitig und für unterschiedliche Zeitdauern mit dem oberen Potentialpunkt 38 oder dem unteren Potentialpunkt 39 des Endstufenzwischenkreises 32 verbunden, so dass sich im zeitlichen Mittel ein dreiphasiges Drehfeld in dem Elektromotor 10 einstellt.

Die Zusatzwicklungen 16 des Elektromotors 10 sind über jeweils einen ihrer Anschlüsse in einer Sternschaltung miteinander verbunden. Jeweils ein weiterer Anschluss der Zusatzwicklungen 16 ist an einen Gleichrichter 110 angeschlossen, welcher als Brückengleichrichter ausgeführt ist und insgesamt sechs Gleichrichterdioden 111 aufweist. Je zwei der Gleichrichterdioden 111 verbinden eine der Bremsleitungen 17 mit einem oberen Potentialpunkt 113 bzw. einem unteren Potentialpunkt 114 einer Gleichspannungsseite 112 des Gleichrichters 110.

Auf der Gleichspannungsseite 112 ist der Gleichrichter 110 über eine Zwischenkreisdiode 163 an einen Zwischenkreis 120 angeschlossen. Der Zwischenkreis 120 umfasst einen Zwischenkreiskondensator 121, über den eine Zwischenkreisspannung abfällt und welcher zwischen einem oberen Zwischenkreispotentialpunkt 126 und einem unteren Zwischenkreispotentialpunkt 127 des Zwischenkreises 120 angeordnet ist. Bei der Zwischenkreisspannung handelt es sich um eine Gleichspannung. Anstatt des Zwischenkreiskondensators 121 kann auch eine Kondensatoranordnung aus mehreren parallel und/oder seriell geschalteten Kondensatoren verwendet werden.

Die Zwischenkreisdiode 163 ist so zwischen dem oberen Potentialpunkt 113 der Gleichspannungsseite 112 des Gleichrichters 110 und dem oberen Zwischenkreispotentialpunkt 126 angeordnet, dass ihre Durchlassrichtung von dem Gleichrichter 110 zu dem Zwischenkreiskondensator 121 weist. Dadurch wird der Zwischenkreiskondensator 121 von dem Gleichrichter aus geladen, wenn eine an der Gleichspannungsseite 112 des Gleichrichters 110 abfallende Spannung größer ist als die über den Zwischenkreiskondensator 121 abfallende Zwischenkreisspannung. Um den Ladestrom, der in den Zwischenkreiskondensator 121 fließt, zu begrenzen, kann ein Ladewiderstand zwischen den Zwischenkreiskondensator 121 und den Gleichrichter 110 geschaltet sein, der von dem Ladestrom durchflossen wird und diesen dadurch begrenzt. Beispielsweise kann der Ladewiderstand zwischen dem Gleichrichter 110 und dem unteren oder oberen Zwischenkreispotentialpunkt 127, 126 angeordnet sein. Alternativ kann der Ladewiderstand in Reihe mit dem Zwischenkreiskondensator 121 geschaltet sein und zwischen dem oberen Zwischenkreispotentialpunkt 126 und dem Zwischenkreiskondensator 121 bzw. zwischen dem Zwischenkreiskondensator 121 und dem unteren Zwischenkreispotentialpunkt 127 angeordnet sein.

Eine Kurzschlussschalteinrichtung 161 ist an einer dem Zwischenkreiskondensator 121 gegenüberliegenden Seite der Zwischenkreisdiode 163 derart angeschlossen, dass zwei Strompfade, die den oberen Potentialpunkt 113 der Gleichspannungsseite 112 des Gleichrichters 110 mit dem oberen Zwischenkreispotentialpunkt 126 beziehungsweise den unteren Potentialpunkt 114 der Gleichspannungsseite 112 des Gleichrichters 110 mit dem unteren Zwischenkreispotentialpunkt 127 verbinden, bei Schließen der Kurzschlussschalteinrichtung 161 kurzgeschlossen werden. Dadurch wird der Zwischenkreis 120 vor der Zwischenkreisdiode 163 kurzgeschlossen.

Die Kurzschlussschalteinrichtung 161 ist zum Schalten hoher Ströme geeignet und kann beispielsweise einen Leistungstransistor, etwa einen Bipolartransistor mit isolierter Gate-Elektrode (insulated gate bipolar transistor, IGBT), aufweisen.

Zur Bestimmung des Stromes, welcher bei geöffneter Kurzschlussschalteinrichtung 161 in den Zwischenkreis 120 oder bei geschlossener Kurzschlussschalteinrichtung 161 durch die Kurzschlussschalteinrichtung 161 fließt, ist in einem der Strompfade zwischen dem Gleichrichter 110 und der Kurzschlussschalteinrichtung 161 eine Strommesseinrichtung 122 angeordnet. In dem in Figur 2 dargestellten Ausführungsbeispiel ist die Strommesseinrichtung 122 zwischen dem an den unteren Zwischenkreispotentialpunkt 127 angeschlossenen Anschluss der Kurzschlussschalteinrichtung 161 und dem unteren Potentialpunkt 114 der Gleichspannungsseite 112 des Gleichrichters 110 angeordnet.

Die Strommesseinrichtung 122 ist dazu ausgebildet, ein den Stromfluss zwischen der Kurzschlussschalteinrichtung 161 und dem Gleichrichter 110 repräsentierendes Gleichrichterstromsignal zu erzeugen. Die Strommesseinrichtung 122 kann, wie dargestellt, aus einem niederohmigen Messwiderstand 123 bestehen, der in einem der Strompfade zwischen Gleichrichter 110 und Kurzschlussschalteinrichtung 161 angeordnet ist. Alternativ kann die Strommesseinrichtung 122 auch einen Stromwandler, beispielsweise einen Gleichstromwandler, umfassen.

Die Kurzschlussschalteinrichtung 161 bildet mit der Induktivität der Zusatzwicklungen 16, mit der Zwischenkreisdiode 163 und mit dem Zwischenkreiskondensator 121 einen Hochsetzsteller 160. Dies ermöglicht es, dem Zwischenkreis 120 auch dann elektrische Energie zuzuführen, wenn die Zwischenkreisspannung größer ist als die an der Gleichspannungsseite 112 des Gleichrichters 110 anliegende Spannung. Nach dem Schließen der Kurzschlussschalteinrichtung 161 kann sich bei Bewegung des Elektromotors 10 ein hoher Induktionsstrom in den Zusatzwicklungen 16 einstellen, welcher über den Gleichrichter 110 durch die Kurzschlussschalteinrichtung 161 fließt. Nach einem erneuten Öffnen der Kurzschlussschalteinrichtung 161 wird dieser Stromfluss aufgrund der Induktivität der Zusatzwicklungen 16 zunächst aufrechterhalten, wodurch sich eine Spannung über die geöffnete Kurzschlussschalteinrichtung 161 aufbaut. Übersteigt diese Spannung die Zwischenkreisspannung, öffnet die Zwischenkreisdiode 163 und der Zwischenkreiskondensator 121 wird geladen.

Parallel zu dem Zwischenkreiskondensator 121 des Zwischenkreises 120 der Sicherheitsbremse 100 ist eine Energieaufnahmevorrichtung 150 angeschlossen. Die Energieaufnahmevorrichtung 150 ist schaltbar ausgeführt und kann im eingeschalteten Zustand elektrische Energie aus dem Zwischenkreiskondensator 121 aufnehmen. In dem in Figur 2 dargestellten Ausführungsbeispiel weist die Energieaufnahmevorrichtung 150 einen Lastwiderstand 151 und eine Lastschalteinrichtung 152 auf. Der Lastwiderstand 151 und die Lastschalteinrichtung 152 sind in Reihe zwischen den oberen Zwischenkreispotentialpunkt 126 und den unteren Zwischenkreispotentialpunkt 127 geschaltet, so dass bei geschlossener Lastschalteinrichtung 152 ein Strom durch den Lastwiderstand 151 fließt und der Zwischenkreiskondensator 121 über den Lastwiderstand 151 entladen wird. Dabei nimmt der Lastwiderstand 151 Energie aus dem Zwischenkreiskondensator auf, die aus der Lastschalteinrichtung 152 und dem Lastwiderstand 152 gebildete Energieaufnahmevorrichtung 150 ist also eingeschaltet. Die Lastschalteinrichtung 152 ist, wie die Kurzschlussschalteinrichtung 161, zum Schalten hoher Ströme geeignet und kann ebenfalls einen IGBT aufweisen. Eine Lastfreilaufdiode 153 ist derart parallel zu dem Lastwiderstand 151 geschaltet, dass die Zwischenkreisspannung in Sperrrichtung über die Lastfreilaufdiode 153 abfällt.

Anstatt des Lastwiderstands 151 kann die Energieaufnahmevorrichtung 150 zur Aufnahme der elektrischen Energie des Zwischenkreises 120 beispielsweise auch eine Einrichtung aufweisen, die elektrische Energie aus dem Zwischenkreis 120 in ein Stromversorgungssystem des Motorsteuerungssystems 2 zurückspeist.

Zur Steuerung weist die Sicherheitsbremse 100 eine Kontrolleinrichtung 130 auf. Die Kontrolleinrichtung 130 wird über die Zwischenkreisspannung mit elektrischer Energie versorgt. Hierzu ist ein Netzteil 170 parallel zu dem Zwischenkreiskondensator 121 an den Zwischenkreis 120 angeschlossen. Das Netzteil 170 versorgt die Kontrolleinrichtung 130 über einen Versorgungskanal 131 mit elektrischer Energie. Bei dem Netzteil 170 kann es sich beispielsweise um ein Schaltnetzteil handeln. Es kann dazu ausgebildet sein, die Zwischenkreisspannung zu transformieren, zu speichern und/oder zu glätten. Da in dem Zwischenkreiskondensator 121 und gegebenenfalls auch in dem Netzteil 170 Energie gespeichert werden kann, kann die Kontrolleinrichtung 130 auch nach einem Stillstand des Elektromotors 10 und/oder dem Ausbleiben des Antriebssignals in den Antriebswicklungen 14 eine Zeit lang mit elektrischer Energie versorgt werden.

Im Normalbetrieb ist die Kurzschlussschalteinrichtung 161 geöffnet. Übersteigt die an der Gleichspannungsseite 112 des Gleichrichters 110 abfallende Spannung die Zwischenkreisspannung, so wird der Zwischenkreiskondensator 121 über die Zwischenkreisdiode 163 geladen. Die an der Gleichspannungsseite 112 des Gleichrichters 110 abfallende Spannung wird während des Betriebes der Motorsteuerung 2 stets so hoch gehalten, dass sie für die Versorgung der Kontrolleinrichtung 130 über das Netzteil 170 ausreicht. Dies kann auch bei Stillstand des Elektromotors 10 durch eine geeignete Wahl der Phasenlage der Antriebssignale, beispielsweise durch ein Antriebssignal, welches lediglich eine flussbildende Stromkomponente in den Antriebswicklungen 14 erzeugt, sichergestellt werden. Um die Belastung des Antriebs 1 im Normalbetrieb möglichst gering zu halten, weist das Netzteil 170 eine geringe Verlustleistung auf.

Je nach Betriebszustand des Elektromotors 10, insbesondere abhängig von dessen Drehzahl, variiert die Induktionsspannung in den Zusatzwicklungen 16 und damit die Zwischenkreisspannung in dem Zwischenkreis 120 der Sicherheitsbremse 100. Um diese Variationen ausgleichen zu können, ist das Netzteil 170 dazu ausgebildet, über einen großen eingangsseitigen Spannungsbereich betrieben zu werden. Der eingangsseitige Spannungsbereich kann beispielsweise einen Bereich von 10 V bis 1000 V, insbesondere von 20 V bis 500 V abdecken.

Die Kontrolleinrichtung 130 kann einen Mikrocontroller oder einen Mikroprozessor und einen Speicher aufweisen. Die Kontrolleinrichtung 130 weist außerdem eine Kommunikationseinrichtung auf, welche an das Datenübertragungsmedium 50 angeschlossen ist. Über die Kommunikationseinrichtung kann die Kontrolleinrichtung 130 eine Datenverbindung mit der übergeordneten Steuereinheit 40 aufbauen und Kommunikationsdaten mit der übergeordneten Steuereinheit 40 austauschen. Im in Figur 1 dargestellten Ausführungsbeispiel wird die Datenverbindung über die Gebereinheit 20 und das in die Motorsteuerung 30 integrierte Sicherheitsmodul 60 aufgebaut.

Die Kontrolleinrichtung 130 erfasst den Zustand des Antriebs 1 über eine Antriebssensoreinrichtung 140, welche an die Kontrolleinrichtung 130 über einen Antriebssensorkanal 141 angeschlossen ist. Die Antriebssensoreinrichtung 140 kann einen oder mehrere Trennverstärker aufweisen. Die Antriebssensoreinrichtung 140 ist an die Bremsleitungen 17 angeschlossen und kann so die drei über die Zusatzwicklungen 16 abfallenden Spannungen erfassen. Über den Antriebssensorkanal 141 kann die Antriebssensoreinrichtung 140 ein diese Spannungen repräsentierendes Antriebsmesssignal an die Kontrolleinrichtung 130 übertragen. Über das Antriebsmesssignal kann die Kontrolleinrichtung 130 beispielsweise die Amplitude, Phasenlage oder Taktfrequenz der in den Zusatzwicklungen 16 induzierten Spannungen bestimmen. Über die in den Zusatzwicklungen 16 induzierten Spannungen können dann die durch das Antriebssignal in den Antriebswicklungen 14 erzeugten Spannungen und Stromflüsse und damit das Antriebssignal ermittelt werden.

Außerdem ist die Antriebssensoreinrichtung 140 an den oberen Zwischenkreispotentialpunkt 126 und den unteren Zwischenkreispotentialpunkt 127 des Zwischenkreises 120 angeschlossen und bildet dadurch eine Spannungsmesseinrichtung 125 zur Erfassung der Zwischenkreisspannung. Ein die Zwischenkreisspannung repräsentierendes Zwischenkreisspannungssignal kann von der Antriebssensoreinrichtung 140 über den Antriebssensorkanal 141 an die Kontrolleinrichtung 130 übermittelt werden. Der Antriebssensorkanal 141 kann von dem Zwischenkreis 120 und den Bremsleitungen 17 galvanisch isoliert sein.

Bei einer alternativen Ausführungsform der Sicherheitsbremse 100 kann die Antriebssensoreinrichtung 140 auch nur die über die Zusatzwicklungen 16 abfallenden Spannungen messen. Die Zwischenkreisspannung kann dann über eine separat ausgeführte Spannungsmesseinrichtung 125, welche beispielsweise ebenfalls einen Trennverstärker aufweisen kann, gemessen werden.

Die Kontrolleinrichtung 130 erfasst über eine Stromsensorleitung 124 ein Gleichrichterstromsignal, welches den durch die Strommesseinrichtung 122 erfassten, auf der Gleichspannungsseite 112 des Gleichrichters 110 fließenden Gleichrichterstrom repräsentiert. Handelt es sich bei der Strommesseinrichtung 122 um einen Messwiderstand 123, so wird über die Stromsensorleitung 124 die über den Messwiderstand 123 abfallende Spannung abgegriffen. Handelst es sich bei der Strommesseinrichtung 122 beispielsweise um einen Stromwandler, so kann das Gleichrichterstromsignal auch einen dem Gleichrichterstrom proportionalen Stromfluss umfassen.

Die Kontrolleinrichtung 130 ist über einen Kurzschlusssteuerkanal 162 an die Kurzschlussschalteinrichtung 161 und über einen Laststeuerkanal 154 an die Energieaufnahmevorrichtung 150 und den Hochsetzsteller 160 angeschlossen. Dadurch kann die Kontrolleinrichtung 130 ein Ein- und Ausschalten der Energieaufnahmevorrichtung 150 beziehungsweise ein Öffnen und Schließen des Hochsetzstellers 160 steuern. Beispielsweise kann über den Kurzschlusssteuerkanal 162 und den Laststeuerkanal 154 eine Gatespannung der Leistungstransistoren der Lastschalteinrichtung 152 oder der Kurzschlussschalteinrichtung 161 durch die Kontrolleinrichtung 130 verändert werden.

Um den Elektromotor 10 zum Abbremsen über die Zusatzwicklungen 16 generatorisch zu belasten, ist ein höherer Stromfluss in den Zusatzwicklungen 16 notwendig, als sich im Normalbetrieb bei der Versorgung des Netzteils 170 einstellt. Um diesen hohen Stromfluss zu erzeugen, wird die Kurzschlussschalteinrichtung 161 so lange geschlossen, bis sich ein ausreichender Kurzschlussstrom durch die Zusatzwicklungen 16, den Gleichrichter 110 und die Kurzschlussschalteinrichtung 161 eingestellt hat. Nach einem Öffnen der Kurzschlussschalteinrichtung 161 wird der durch den Kurzschlussstrom verursachte Stromfluss aufgrund der Induktivität der Zusatzwicklungen 16 zunächst aufrecht erhalten und die Spannung an der Gleichspannungsseite 112 des Gleichrichters 110 steigt an. Sobald die Spannung an der Gleichspannungsseite 112 die Zwischenkreisspannung übersteigt, wird der durch die Zusatzwicklungen 16 fließende Strom dem Zwischenkreiskondensator 121 zugeführt. Insgesamt wird dabei mechanische Energie aus der Bewegung des Elektromotors 10 in elektrische Energie umgewandelt und in dem Zwischenkreiskondensator 121 gespeichert, was zu einem Abbremsen des Elektromotors 10 führt.

Aufgrund der Spannungstransformation durch den Hochsetzsteller 160 kann der Elektromotor 10 auch noch bei niedrigen Drehzahlen abgebremst werden, bei welchen sich im Normalbetrieb an der Gleichspannungsseite 112 des Gleichrichters 110 ein Spannung einstellen würde, die niedriger ist als die Zwischenkreisspannung über den Zwischenkreiskondensator 121.

Wird der Ladestrom des Zwischenkreiskondensators 121 im Normalbetrieb durch einen Ladewiderstand begrenzt, kann dieser gegebenenfalls zur Erzeugung eines zum Bremsen des Elektromotors 10 ausreichenden, hohen Stromflusses während des Bremsens durch eine dem Ladewiderstand parallelgeschaltete Schalteinrichtung überbrückt werden.

Um ein ausreichendes Bremsmoment auf den Elektromotor 10 zu übertragen, wird die Kurzschlussschalteinrichtung 161 von der Kontrolleinrichtung 130 über den Kurzschlusssteuerkanal 162 in rascher Folge geschlossen und geöffnet. Das Schließen und Öffnen der Kurzschlussschalteinrichtung 161 kann beispielsweise pulsweitenmoduliert erfolgen. Den sich dabei einstellenden Strom an der Gleichspannungsseite 112 des Gleichrichters 110 kann die Kontrolleinrichtung 130 über den Messwiderstand 123 und das Gleichrichterstromsignal messen. Dadurch ist es der Kontrolleinrichtung 130 möglich, die dem Elektromotor 10 über den Strom in den Zusatzwicklungen 16 und dem Gleichrichter 110 entzogene Energie zu regeln und so ein geregeltes Abbremsen des Elektromotors 10 auszuführen. Das Abbremsen des Elektromotors 10 kann auch ohne Regelung rein gesteuert erfolgen.

Die elektrische Spannung des Zwischenkreises 120 kann durch die Kontrolleinrichtung 130 über die Energieaufnahmevorrichtung 150 gesteuert werden. Steigt die Zwischenkreisspannung, etwa bei einem Abbremsen des Motors, über einen zulässigen Maximalwert an, so kann die Kontrolleinrichtung 130 die Lastschalteinrichtung 152 schließen und so den Zwischenkreiskondensator 121 über den Lastwiderstand 151 entladen. Die von dem Hochsetzsteller 160 in den Zwischenkreiskondensator 121 transferierte Bremsenenergie wird damit in dem Lastwiderstand 151 in Verlustwärme umgewandelt.

Zur Regelung der Zwischenkreisspannung kann beispielsweise eine Zweipunktregelung zum Einsatz kommen, die die Lastschalteinrichtung 152 bei Überschreiten einer zulässigen Maximalspannung des Zwischenkreises 120 schließt und bei einem anschließenden Unterschreiten eines unteren Grenzwertes der Zwischenkreisspannung, welcher niedriger als die Maximalspannung ist, wieder öffnet. Um eine Überlastung der Sicherheitsbremse 100 durch eine übermäßige Erwärmung zu vermeiden, kann die Temperatur des Lastwiderstands 151 beispielsweise mittels eines an dem Lastwiderstand 151 angeordneten Temperatursensors überwacht werden.

Alternativ kann die Sicherheitsbremse 100 auch ohne den Hochsetzsteller 160 ausgeführt werden. In diesem Fall kann der Zwischenkreiskondensator 121 direkt an die Gleichspannungsseite 112 des Gleichrichters 110 angeschlossen werden. Die Kontrolleinrichtung 130 steuert in diesem Fall die Energieaufnahmevorrichtung 150 derart, dass während des Normalbetriebs, wenn also der Elektromotor 10 nicht gebremst wird, die Zwischenkreisspannung im Bereich der durch die Bewegung des Elektromotors 10 in den Zusatzwicklungen 16 induzierten und durch den Gleichrichter 110 gleichgerichteten Spannung liegt. Zum Abbremsen des Elektromotors 10 wird die Energieaufnahmevorrichtung 150 so gesteuert, dass ein erhöhter Strom durch die Zusatzwicklungen 16 auftritt und der Strom der Energieaufnahmevorrichtung 150 zugeführt wird.

Die Funktionen des Hochsetzstellers 160 und des Gleichrichters 110 können auch zusammengefasst werden, indem anstatt des Gleichrichters 110 ein Stromrichter eingesetzt wird, welcher anstatt der Gleichrichterdioden 111 Schaltelemente, beispielsweise Leistungstransistoren, aufweist. Ein solcher Stromrichter erfordert eine drehfeldabhängige Steuerung, welcher Informationen über die Bewegung des Elektromotors 10 zugeführt werden. Das Drehfeld kann mit einer geeigneten Messeinrichtung zur Messung des Drehfeldes bestimmt werden, etwa mit der Gebereinheit 20 oder mit der Antriebssensoreinrichtung 140. Über die Schaltelemente des Stromrichters können die Zusatzwicklungen 16 gezielt kurzgeschlossen werden, um den Stromfluss zu erzeugen, der für die Transformation der Induktionsspannung an den Zusatzwicklungen 16 auf die Zwischenkreisspannung notwendig ist.

Anstatt das Drehfeld direkt am Motor zu messen, kann das Drehfeld auch ermittelt werden, indem die Position des Elektromotors 10 mit Hilfe eines geeigneten Motormodells berechnet wird. Ein solches Motormodell kann beispielsweise das über die Antriebssensoreinrichtung 140 übertragene Antriebsmesssignal verarbeiten und in der Kontrolleinrichtung 130 oder einer anderen, in die Sicherheitsbremse 100 integrierte Datenverarbeitungsvorrichtung berechnet werden.

Die Kontrolleinrichtung 130 der Sicherheitsbremse 100 kann das an den Antriebswicklungen 14 anliegende, dreiphasige Antriebssignal im laufenden Betrieb über die Zusatzwicklungen 16 und die Antriebssensorvorrichtung 140 überwachen. Dabei kann die Kontrolleinrichtung 130 insbesondere die Amplituden, die Modulationsfrequenzen und die relative Phasenlage der Antriebssignale erfassen. Sollte von der Sicherheitsbremse 100 erkannt werde, dass das Antriebssignal ausbleibt, so kann die Sicherheitsbremse 100 selbsttätig ein Abbremsen des Elektromotors 10 einleiten. Handelt es sich bei dem Antriebssignal um ein pulsweitenmoduliertes Antriebssignal, kann das Fehlen eines Antriebssignals oder ein Defekt der Motorsteuerung 30 von der Kontrolleinrichtung 130 der Sicherheitsbremse 100 beispielsweise dadurch erkannt werden, dass die in den Zusatzwicklungen 16 induzierten Spannungen keine Anteile mehr aufweisen, die mit der Taktfrequenz der Pulsweitenmodulation moduliert sind.

Neben dem Antriebssignal kann die Kontrolleinrichtung 130 über die Antriebssensorvorrichtung 140 auch die Drehzahl des Elektromotors 10 überwachen. Hierzu bestimmt sie den Anteil des Antriebsmesssignals, der die durch die Bewegung des Elektromotors 10 in den Zusatzwicklungen 16 induzierten Spannungen repräsentiert.

Die Antriebswicklungen 14 und die Zusatzwicklungen 16 sind an zwei getrennte, voneinander unabhängige Zwischenkreise, den Endstufenzwischenkreis 32 bzw. den Zwischenkreis 120 der Sicherheitsbremse 100, angeschlossen. Der Endstufenzwischenkreis 32 stellt die für den Antrieb des Elektromotors 10 benötigte Spannung bereit, der Zwischenkreis 120 der Sicherheitsbremse 100 wird für die Versorgung der Kontrolleinrichtung 130 und ein Abbremsen des Elektromotors 10 verwendet.

Mithilfe der Sicherheitsbremse 100 kann der Elektromotor 10 bei allen Störungen an den Komponenten des Antriebs 1 sicher abgebremst werden. Beispielsweise kann ein Defekt der Motorsteuerung 30, der Antriebsleitungen 15 oder der Antriebswicklungen 14 von der Sicherheitsbremse 100 über das Ausbleiben des Antriebssignals oder über Fehler in dem Antriebssignal detektiert werden. Die Sicherheitsbremse 100 kann dann den Elektromotor 10 abbremsen und den Fehler an die übergeordnete Steuereinheit 40 zurückmelden. Ein Defekt der Gebereinheit 20 kann durch das Sicherheitsmodul 60 oder die übergeordnete Steuereinheit 40 anhand eines ausbleibenden oder fehlerhaften Gebersignals detektiert werden. Anschließend kann das in die Motorsteuerung 30 integrierte Sicherheitsmodul 60 die Endstufe 31 der Motorsteuerung 30 abschalten (STO, Safe Torque off). Infolge des ausbleibenden Antriebssignals wird dadurch ein Abbremsen des Elektromotors 10 durch die Sicherheitsbremse 100 ausgelöst. Ein Defekt des Sicherheitsmoduls 60 kann durch die übergeordnete Steuereinheit 40 erkannt werden. Daraufhin kann der Elektromotor 10 über die Sicherheitsbremse 100 abgebremst werden.

Da die Sicherheitsbremse 100 über die Zusatzwicklungen 16 mit Energie aus den Antriebswicklungen 14 oder aus der Bewegung des Elektromotors 10 versorgt wird, ist die Sicherheitsbremse 100 nach Anschalten des Motorsteuerungssystems 2 nicht sofort betriebsbereit. Nach einem Anschalten des Motorsteuerungssystems 2 werden zunächst nur die Motorsteuerung 30, das integrierte Sicherheitsmodul 60 und die übergeordnete Steuereinheit 40 mit elektrischer Energie versorgt. Nach dem Anschalten sperrt das Sicherheitsmodul 60 der Motorsteuerung 30 zunächst die Endstufe 31 der Motorsteuerung 30 und die Antriebswicklungen 14 werden nicht mit Energie versorgt. Dies verhindert zunächst sicher ein Anlaufen des Elektromotors 10.

Nachdem die übergeordnete Steuereinheit 40 nach dem Anschalten hochgefahren ist und initialisiert worden ist, aktiviert die übergeordnete Steuereinheit 40 eine Sicherheitsstopfunktion der Motorsteuerung 30. Hierzu kommuniziert die übergeordnete Steuereinheit 40 mit dem Sicherheitsmodul 60 der Motorsteuerung 30. Das Sicherheitsmodul 60 initiiert und überwacht anschließend die Ausführung der Sicherheitsstopfunktion. Solange die Sicherheitsstopfunktion ausgeführt wird, verhindert das Sicherheitsmodul 60 sicher eine Bewegung des Elektromotors 10.

Bei aktiver Sicherheitsstopfunktion kann die Endstufe 31 der Motorsteuerung 30 von dem Sicherheitsmodul 60 der Motorsteuerung 30 sicher freigegeben werden. Dadurch können Signale an die Antriebswicklungen 14 des Elektromotors 10 angelegt werden, gleichzeitig überwacht das Sicherheitsmodul 60 die Motorsteuerung 30 dahingehend, dass keine Signale angelegt werden, die eine Bewegung des Elektromotors 10 veranlassen würden. Dadurch wird der Elektromotor 10 in einer sicheren Stellung gehalten.

Die Sicherheitstopfunktion beinhaltet, dass nach der Freigabe der Endstufe 31 durch die Motorsteuerung 30 ein Sicherheitsstop-Antriebssignal an die Antriebswicklungen 14 angelegt wird. Bei dem Sicherheitsstop-Antriebssignal kann es sich um ein pulsweitenmoduliertes Spannungs- oder Stromsignal handeln. Das Sicherheitsstop-Antriebssignal ist derart ausgebildet, dass sich zwar ein Stromfluss durch die Antriebswicklungen 14 aufbaut, der Elektromotor 10 aber nicht in Bewegung versetzt wird und in der sicheren Stellung gehalten wird. Das Sicherheitsstop-Antriebssignal kann die Ausgabe des Stillstands-Antriebssignals umfassen.

Ist eine Kompensation eines äußeren Drehmoments auf den Elektromotor 10 notwendig, um den Elektromotor 10 in der sicheren Stellung zu halten, so kann das Sicherheitsstop-Antriebssignal dafür ausgelegt sein, dieses äußere Drehmoment zu kompensieren. Wirkt kein äußeres Drehmoment auf den Elektromotor 10, so kann es sich bei dem Sicherheitsstop-Antriebssignal um ein Antriebssignal handeln, welches lediglich flussbildende und keine drehmomentbildenden Stromkomponenten in den Antriebswicklungen 14 erzeugt. Ein Antriebssignal, welches ausschließlich flussbildende Ströme in den Antriebswicklungen 14 erzeugt, kann beispielsweise ein zum Magnetfeld des Rotors paralleles Statormagnetfeld im Elektromotor 10 erzeugen.

Alternativ kann das Sicherheitsstop-Antriebssignal bei Fehlen eines äußeren Drehmoments auf den Elektromotor 10 auch in rascher Folge alternierende Spannungskomponenten umfassen, welche sich im zeitlichen Mittel aufheben und nur kleine Ströme im Motor erzeugen. Aufgrund der Massenträgheit des Elektromotors 10 führen solche schnell alternierenden Spannungssignale zu keiner Bewegung Elektromotors 10. Die alternierenden Spannungssignale können beispielsweise mit der halben Pulsweitenmodulationsfrequenz des Antriebssignals wiederholt werden.

Über die Sicherheitsstopfunktion und das Sicherheitstop-Antriebssignal kann eine sichere Stillstandsüberwachung (safe operating stop, SOS) des Elektromotors 10 realisiert werden. Die sichere Stillstandsüberwachung führt eine aktive Lageregelung des Elektromotors 10 aus, durch welche der Elektromotor 10 und durch diesen bewegte Maschinenteile in der sicheren Stellung gehalten werden.

Erzeugt das Sicherheitstop-Antriebssignal einen zeitlich veränderlichen Stromfluss in den Antriebswicklungen 14, wie es beispielsweise bei einem pulsweitenmodulierten Sicherheitsstop-Antriebssignal der Fall ist, werden durch das Sicherheitsstop-Antriebssignal aufgrund der magnetischen Kopplung zwischen den Antriebswicklungen 14 und den Zusatzwicklungen 16 in den Zusatzwicklungen 16 Spannungen induziert, welche über den Gleichrichter 110 die Kontrolleinrichtung 130 mit elektrischer Energie versorgen. Die Kontrolleinrichtung 130 der Sicherheitsbremse 100 kann dann starten und über das Datenübertragungsmedium 50 eine Datenverbindung zwischen der Sicherheitsbremse 100 und der übergeordneten Steuereinheit 40 aufbauen, so dass ein Austausch von Kommunikationsdaten möglich it. Die Datenverbindung kann beispielsweise auf dem FSoE-Datenübertragungsprotokoll basieren.

Nach dem Starten der Sicherheitsbremse 100 kann ein Selbsttest aller Funktionen der Sicherheitsbremse 100 durchgeführt werden und eine aktive Überwachung der Signale in den Antriebswicklungen 14 des Elektromotors 10 durch die Sicherheitsbremse 100 wird freigeschaltet. Das Sicherheitsstop-Antriebssignal ermöglicht es, dass die Funktion der Motorsteuerung 30 durch die Sicherheitsbremse 100 noch vor Anlaufen des Elektromotors 10 überwacht wird, indem die durch das Sicherheitsstop-Antriebssignal induzierten Spannungen in den Zusatzwicklungen 16 von der Antriebssensoreinrichtung 140 der Sicherheitsbremse 100 erfasst werden.

Sobald die sichere Datenverbindung zwischen der Sicherheitsbremse 100 und der übergeordneten Steuereinheit 40 über das Datenübertragungsmedium 50 aufgebaut ist, kann der übergeordneten Steuereinheit 40 die Betriebsbereitschaft der Sicherheitsbremse 100 über die sichere Datenverbindung gemeldet werden. Daraufhin deaktiviert die übergeordnete Steuereinheit 40 die Sicherheitsstopfunktion der Motorsteuerung 30. Nun können im Normalbetrieb der Elektromotor 10 über die Motorsteuerung 30 gesteuert und die Motorsteuerung 30 sowie der Elektromotor 10 von der Sicherheitsbremse 100 überwacht werden.

Wird der Elektromotor 10 mittels eines pulsweitenmodulierten Antriebssignals betrieben, kann die Kontrolleinrichtung 130 der Sicherheitsbremse 100 die korrekte Funktionsweise oder die Betriebsbereitschaft der Motorsteuerung 30 daran erkennen, dass das pulsweitenmodulierte Antriebssignal in den Antriebswicklungen 14 ein Signal in den Zusatzwicklungen 16 induziert, welches mit der Pulsweitenmodulationsfrequenz des Antriebssignals moduliert ist. Die Pulsweitenmodulationsfrequenz kann beispielsweise bei einigen Kilohertz liegen. Liegt auch bei Stillstand des Elektromotors 10 ein Antriebssignal an den Antriebswicklungen 14 an, welches keine oder eine zu vernachlässigende, beispielsweise eine sich im zeitlichen Mittel aufhebende, drehmomentbildende Stromkomponente erzeugt, kann die korrekte Funktionsweise oder Betriebsbereitschaft der Motorsteuerung 30 durch die Sicherheitsbremse 100 auch bei Stillstand des Elektromotors 10 erkannt werden.

Die Sicherheitsbremse 100 kann ein sicheres Abbremsen des Elektromotors 10 ausführen, sobald ein unkontrollierter Betriebszustand des Elektromotors 10 festgestellt wird. Ein solcher unkontrollierter Betriebszustand kann beispielsweise dann vorliegen, wenn das Antriebssignal in den Antriebwicklungen 14 ausfällt, der Elektromotor 10 sich jedoch noch weiter bewegt, wie es zum Beispiel bei einem unkontrollierten Austrudeln des Elektromotors 10 der Fall ist. Ein solcher Betriebszustand kann beispielsweise dadurch von der Sicherheitsbremse 100 erfasst werden, dass das von der Antriebssensoreinrichtung 140 erfasste, in den Zusatzwicklungen 16 induzierte Spannungssignal zum einen keine mit der Pulsweitenmodulationsfrequenz des Antriebssignals modulierten Anteile, zum anderen weiterhin durch die Bewegung des Elektromotors 10 induzierte Spannungskomponenten aufweist.

Das Motorsteuerungssystem 2 kann sicher deaktiviert werden, indem die übergeordnete Steuerung 40 zunächst das Sicherheitsmodul 60 veranlasst, die Motorsteuerung 30 in einen sicheren drehmomentfreien Betriebsmodus (safe torque off, STO) zu versetzen. Der sichere drehmomentfreie Betriebsmodus wird durch das Sicherheitsmodul 60 initiiert und überwacht. Die Ausführung des drehmomentfreien Betriebsmodus hat zur Folge, dass die Endstufe 31 der Motorsteuerung 30 gesperrt wird und an den Antriebswicklungen 14 kein pulsweitenmodulierte Antriebssignal mehr anliegt. Das Fehlen des Antriebssignals wird durch die Sicherheitsbremse 100 über die Antriebssensoreinrichtung 140 und die Zusatzwicklungen 16 erfasst, woraufhin die Sicherheitsbremse 100 den Elektromotor 10 zum Stillstand bringt.

Nachdem der Elektromotor 10 durch die Sicherheitsbremse 100 abgebremst wurde, kann eine mechanische Haltebremse zugeschaltet werden, die den Elektromotor 10 festsetzt. Die Sicherheitsbremse 100 schaltet erst einige Zeit nach Stillstand des Elektromotors 10 ab, so dass der Stillstand noch durch die Sicherheitsbremse 100 an die übergeordnete Steuereinheit 40 gemeldet werden und eventuell das Einfallen der mechanischen Haltebremse durch die Sicherheitsbremse 100 überwacht werden kann. Anschließend kann die Sicherheitsbremse 100 abgeschaltet werden. Die für den Betrieb der Sicherheitsbremse 100 nach Stillstand des Elektromotors 10 notwendige Energie kann in dem Zwischenkreiskondensator 121, dem Netzteil 170 oder einem anderen, an den Zwischenkreis 120 angeschlossenen Energiespeicher gespeichert werden.

Um einen sicheren Betrieb des Antriebs 1 zu gewährleisten, werden die Funktionsfähigkeit der übergeordneten Steuereinheit 40, des Sicherheitsmoduls 60 der Motorsteuerung 30 und der Sicherheitsbremse 100, sowie die Kommunikation dieser Komponenten untereinander über das Datenübertragungsmedium 50 während des Betriebs überwacht. Dies umfasst auch regelmäßige Selbsttests der Sicherheitsbremse 100, die diese beispielsweise eigenständig ausführen und deren Ergebnisse sie an die übergeordnete Steuereinheit 40 zurückmelden kann.

Die übergeordnete Steuereinheit 40 und die Sicherheitsbremse 100 tauschen nach Aufbau der Datenverbindung über das Datenübertragungsmedium 50 im Rahmen des sicheren Datenübertragungsprotokolls regelmäßig Kommunikationsdaten aus. Die Kommunikationsdaten können beispielsweise Statusmeldungen beinhalten. Durch einen Ausfall der Datenverbindung kann ein Defekt der Sicherheitsbremse 100 von der übergeordneten Steuereinheit 40 erkannt werden. Die übergeordnete Steuereinheit 40 kann sodann das Sicherheitsmodul 60 der Motorsteuerung 30 veranlassen, den Elektromotor 10 abzubremsen. Insbesondere kann über einen Ausfall der Datenverbindung zwischen Sicherheitsbremse 100 und übergeordneter Steuereinheit 40 ein Ausfall all der Komponenten der Sicherheitsbremse 100 detektiert werden, die zur Spannungsversorgung der Sicherheitsbremse 100 und der Kontrolleinrichtung 130 notwendig sind. Dies betrifft unter anderem den Gleichrichter 110, das Netzteil 170 und den Zwischenkreiskondensator 121.

Ein Defekt der Kontrolleinrichtung 130 kann zum einen ebenfalls zu einem Ausfall der Datenverbindung zwischen der Sicherheitsbremse 100 und der übergeordneten Steuereinheit 40 führen und so von der übergeordneten Steuereinheit 40 durch ein Ausbleiben von Kommunikationsdaten detektiert werden. Zum anderen weist die Kontrolleinrichtung 130 sichere integrierte Schaltungen auf und überwacht sich während des Betriebs selbstständig. Tritt ein Fehler auf und ist die Datenverbindung zu der übergeordneten Steuereinheit 40 noch vorhanden, so kann die Kontrolleinrichtung 130 den Fehler über die Datenverbindung an die übergeordnete Steuereinheit 40 melden und ein Abbremsen des Elektromotors 10 veranlassen.

Ein Defekt der Antriebssensoreinrichtung 140 wird von der Kontrolleinrichtung 130 betriebsbedingt durch ein Ausbleiben des Antriebmesssignals, das die über die Zusatzwicklungen 16 detektierten Antriebssignale repräsentiert, erkannt. Bei einem Ausfall der Antriebssensoreinrichtung 140 kann der Elektromotor 10 durch die Sicherheitsbremse 100 oder die Motorsteuerung 30 sicher gebremst werden. Gleiches gilt für Defekte an der Spannungsmesseinrichtung 125 zur Erfassung der Zwischenkreisspannung.

Diejenigen Bauteile der Sicherheitsbremse 100, die während des normalen Betriebs nicht verwendet werden und lediglich dem Abbremsen des Elektromotors 10 dienen, können während des Betriebes in regelmäßigen Abständen auf ihre Funktion überprüft werden. Dies betrifft insbesondere den Hochsetzsteller 160 und die Energieaufnahmevorrichtung 150. Diese Funktionsprüfungen können auch im Rahmen des Selbsttests der Sicherheitsbremse 100, der nach dem Starten der Sicherheitsbremse 100 durchgeführt werden kann, ausgeführt werden. Wird bei einem der Selbsttests ein Fehler festgestellt, Kann dieser an die übergeordnete Steuerung 40 gemeldet werden und ein Abbremsen des Elektromotors 10 durch die Motorsteuerung 30 durchgeführt werden.

Der Hochsetzsteller 160 ist während des normalen Betriebs geöffnet. Um seine Funktion zu testen, kann er kurzzeitig geschlossen werden, indem die Kurzschlussschalteinrichtung 161 geschlossen wird. Dadurch baut sich ein Stromfluss über den Messwiderstand 123 der Strommesseinrichtung 122 auf. Dieser Stromfluss kann von der Kontrolleinrichtung 130 über die Stromsensorleitung 124 gemessen und damit das korrekte Schließen der Kurzschlussschalteinrichtung 161, die Funktionsfähigkeit des Hochsetzstellers 160 und die Funktionsfähigkeit der Strommesseinrichtung 122 überprüft werden.

Die Energieaufnahmevorrichtung 150 ist während des Normalbetriebes ausgeschaltet. Zu Testzwecken kann sie kurzzeitig eingeschaltet werden, beispielsweise indem die Lastschalteinrichtung 152 kurzzeitig geschlossen wird. Dadurch fließt ein Strom über den Lastwiderstand 151 und die Zwischenkreisspannung verringert sich. Indem dieser Spannungsabfall über die Spannungsmesseinrichtung 125 kontrolliert wird, kann die Funktion der Lastschalteinrichtung 152 sowie des Lastwiderstandes 151 und damit die Funktion der Energieaufnahmevorrichtung 150 durch die Kontrolleinrichtung 130 getestet werden. Insgesamt ist damit während des laufenden Betriebs eine regelmäßige Prüfung aller für das Abbremsen des Elektromotors 10 notwendigen Komponenten der Sicherheitsbremse 100 möglich.

Der Antrieb 1 kann auch dazu ausgebildet sein, dass die Betriebstemperatur der Zusatzwicklungen 16 überwacht wird. Eine solche Überwachung kann beispielsweise durch die Sicherheitsbremse 100 erfolgen, indem Temperaturmesssignale einer Temperaturmesseinrichtung, welche an den Zusatzwicklungen angeordnet ist, durch die Kontrolleinrichtung 130 ausgewertet werden. Durch eine Temperaturüberwachung der Zusatzwicklungen 16 kann beispielsweise sichergestellt werden, dass sich der Elektromotor 10 nicht übermäßig erhitzt. Eine übermäßige Erhitzung des Elektromotors 10 könnte beispielsweise dazu führen, dass die magnetischen Elemente des Erregersystems des Elektromotors 10 über die Curietemperatur erhitzt werden und dadurch ihre Magnetisierung verlieren.

Wurde der Elektromotor 10 über die Sicherheitsbremse 100 abgebremst und hat dies zu einer Erwärmung der Zusatzwicklungen 16 und des Elektromotors 10 geführt, kann die Sicherheitsbremse 100 ein erneutes Anfahren so lange verhindern, bis die Temperatur der Zusatzwicklungen 16 unter einen kritischen Höchstwert abgesunken ist. Hierzu kann die Sicherheitsbremse 100 entsprechende Steuersignale an die übergeordnete Steuereinheit 40 weiterleiten.

Die Sicherheitsbremse 100 kann auch dazu ausgebildet sein, die Temperatur der Energieaufnahmevorrichtung 150 zu überwachen, beispielsweise indem über eine an dem Lastwiderstand 151 angeordnete Temperaturmesseinrichtung die Temperatur des Lastwidersandes 151 erfasst wird. Hierdurch ist es unter anderem möglich, dass nach einem Abbremsen des Elektromotors 10 über die Sicherheitsbremse 100 und einer damit verbundenen Erwärmung der Energieaufnahmevorrichtung 150 ein erneutes Anfahren des Elektromotors 10 durch die Sicherheitsbremse 100 so lange verhindert wird, bis die Energieaufnahmevorrichtung 150 ausreichend abgekühlt ist. Ein ausreichendes Abkühlen der Energieaufnahmevorrichtung 150 kann beispielsweise dann erreicht sein, wenn durch ein neuerliches Abbremsen des Elektromotors 10 über die Sicherheitsbremse 100 die Energieaufnahmevorrichtung 150 nicht mehr über eine zulässige Höchsttemperatur erwärmt werden würde.

Einzelne Funktionen der übergeordneten Steuereinheit 40 können auch durch das Sicherheitsmodul 60 übernommen werden, insbesondere dann, wenn die Sicherheitsbremse 100 über das Datenübertragungsmedium 50 nicht nur mit der übergeordneten Steuereinheit 40, sondern auch mit der Motorsteuerung 30, bzw. mit dem integrierten Sicherheitsmodul 60 verbunden ist. In solch einem Fall kann die Sicherheitsbremse 100 Kommunikationsdaten anstatt an die übergeordnete Steuerung 40 auch direkt an die Motorsteuerung 30 oder das Sicherheitsmodul 60 senden.

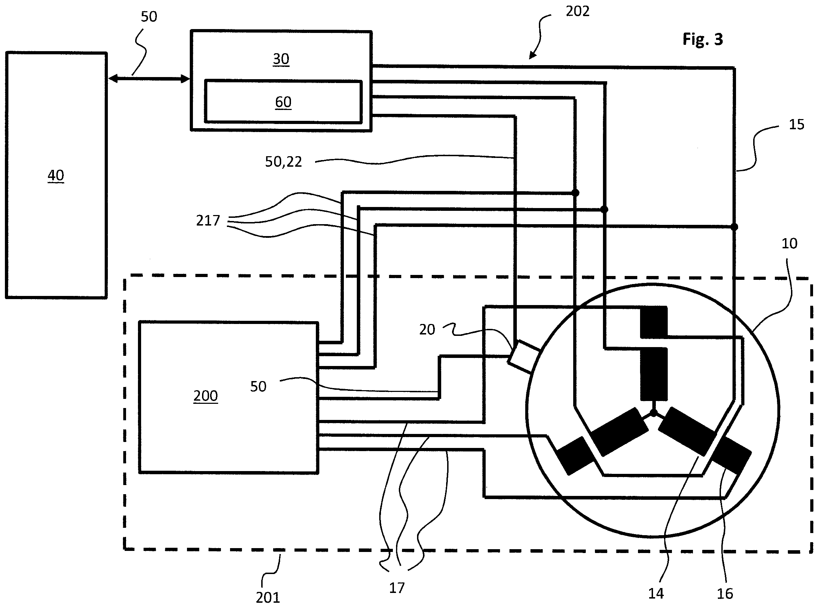

Bei einer alternativen Ausführungsform der Erfindung kann die Sicherheitsbremse zusätzlich auch mit den Antriebswicklungen 14, beispielsweise über die Antriebsleitungen 15, in elektrisch leitender Verbindung stehen. Figur 3 zeigt ein Motorsteuerungssystem 202 mit einem Antrieb 201, welcher eine Sicherheitsbremse 200 umfasst, die eine derartige Ausführung aufweist. Das Motorsteuerungssystem 202, der Antrieb 201 und die Sicherheitsbremse 200 sind, soweit im Folgenden keine Unterschiede beschrieben werden, ausgeführt wie das in Zusammenhang mit den Figuren 1 und 2 beschriebene Motorsteuerungssystem 2, der dort beschriebene Antrieb 1 beziehungsweise die dort beschriebene Sicherheitsbremse 100. Insbesondere umfasst der Antrieb 201 den in den Figuren 1 und 2 dargestellten Elektromotor 10.

Wie die in den Figuren 1 und 2 dargestellte Sicherheitsbremse 100 steht die Sicherheitsbremse 200 über die Bremsleitungen 17 mit den Zusatzwicklungen 16 des Elektromotors 10 elektrisch leitend in Verbindung, um im Betrieb mit diesen zusammenzuwirken. Zusätzlich verfügt der Antrieb 201 über weitere Bremsleitungen 217, über welche die Sicherheitsbremse 200 mit den Antriebswicklungen 14 in elektrisch leitender Verbindung steht. Die weiteren Bremsleitungen 217 können, wie in Figur 3 dargestellt, über die Antriebsleitungen 15 an die Antriebswicklungen 14 angeschlossen sein. Dadurch kann die Sicherheitsbremse 200 im Betrieb nicht nur mit den Zusatzwicklungen 16, sondern auch direkt mit den Antriebswicklungen 14 zusammenwirken. Ein Teil der oder alle Funktionen der Sicherheitsbremse 100, die im Zusammenhang mit den Figuren 1 und 2 beschrieben wurden, können dadurch über die weiteren Bremsleitungen 217 ausgeführt werden. Dies umfasst unter anderem das Übertragen eines Bremsmoments auf den Elektromotor 10, die Versorgung mit elektrischer Energie aus dem Antriebssignal und die Detektion des Antriebssignals.

Beispielsweise kann die Sicherheitsbremse 200 dazu ausgebildet sein, das Bremsmoment über die weiteren Bremsleitungen 217 und die Antriebswicklungen 14 auf den Elektromotor 14 zu übertragen, analog dazu, wie es im Zusammenhang mit dem in den Figuren 1 und 2 dargestellten Antrieb 1 beschrieben wird. Zusätzlich oder alternativ kann die Sicherheitsbremse 200 dazu ausgebildet sein, über die weiteren Bremsleitungen 217 mit elektrischer Energie aus dem Antriebssignal versorgt zu werden und/oder das Antriebssignal über die weiteren Antriebsleitungen 217 zu detektieren.

Um eine galvanische Trennung zwischen den Antriebsleitungen 15 und den weiteren Bremsleitungen 217 zu realisieren und/oder an den Antriebsleitungen 15 anliegende Spannungen des Antriebssignals zu transformieren, können zwischen den Antriebsleitungen 15 und dem Gleichrichter 110 der Sicherheitsbremse 200 Transformatoren oder andere geeignete Spannungswandler angeordnet sein. Dadurch können beispielsweise an der Sicherheitsbremse 200 anliegende Spannungen kleiner als die an den Antriebsleitungen 15 anliegenden Spannungen sein.

Alternativ ist es auch möglich, dass die Sicherheitsbremse 200 nicht über das Antriebssignal, sondern über eine separat ausgeführte Spannungsversorgung mit Energie versorgt wird. Eine solche Spannungsversorgung ist auch bei der in den Figuren 1 und 2 beschriebenen Sicherheitsbremse 100 möglich. Anstatt das Antriebssignal über die Bremsleitungen 17 oder die weiteren Bremsleitungen 217 zu detektieren, kann die Sicherheitsbremse 200 auch dazu ausgebildet sein, das an den Antriebswicklungen 14 anliegende Antriebssignal über separate Sensorleitungen zu erfassen. Diese können beispielsweise ebenfalls direkt oder über Stromwandler mit den Antriebsleitungen 15 oder den Antriebswicklungen 14 in Verbindung stehen.

Die Sicherheitsbremse 100 und die Sicherheitsbremse 200 können im Betrieb mit einer der oder allen Zusatzwicklungen 16 zusammenwirken, indem die Sicherheitsbremsen 100, 200 über die Zusatzwicklung 16 ein an der Antriebswicklung 14 anliegendes Antriebssignal detektieren. Zusätzlich oder alternativ können die Sicherheitsbremsen 100, 200 im Betrieb mit der Zusatzwicklung 16 zusammenwirken, indem die Sicherheitsbremsen 100, 200 über die Zusatzwicklung 16 ein Bremsmoment auf den Elektromotor 10 übertragen. Ebenfalls zusätzlich oder alternativ können die Sicherheitsbremsen 100, 200 im Betrieb mit der Zusatzwicklung 16 zusammenwirken, indem die Sicherheitsbremsen 100, 200 über die Zusatzwicklung 16 mit elektrischer Energie aus dem Antriebssignal versorgt wird.

Indem die Antriebswicklungen 14 und die Zusatzwicklungen 16 elektrisch getrennt voneinander ausgeführt sind, können die Sicherheitsbremsen 100, 200 teilweise oder vollständig unabhängig von den Antriebswicklungen 14 und der an den Elektromotor 10 angeschlossenen Motorsteuerung 30 betrieben werden. Damit können die Sicherheitsbremsen 100, 200 auch dann noch betrieben werden, wenn ein Defekt der Antriebswicklungen 14 oder der Motorsteuerung 30 auftritt. Beispielsweise kann der Elektromotor 10 abgebremst werden, indem der in der Zusatzwicklung 16 induzierte Strom abgeführt wird.

Die Sicherheitsbremsen 100, 200 ermöglichen es, den Elektromotor 10 unabhängig von der Motorsteuerung 30 oder der übergeordneten Steuereinheit 40 abzubremsen. Ein Abbremsen kann dabei erfolgen, indem mechanische Bewegungsenergie des Elektromotors 10 in den Zusatzwicklungen 16 in elektrische Energie umgewandelt wird und die elektrische Energie dem Elektromotor 10 durch die Energieaufnahmevorrichtung 150 entzogen wird. Damit ist ein verschleißfreies Abbremsen des Elektromotors 10 möglich. Zusätzlich kann das Bremsmoment auf den Elektromotor 10 durch die Kontrolleinrichtung 130 der Sicherheitsbremsen 100, 200 aktiv geregelt oder gesteuert werden. Da die Sicherheitsbremsen 100, 200, anders als beispielsweise eine mechanische Bremse, keine Verschleißteile aufweist, können die Sicherheitsbremsen 100, 200 wartungsfrei betrieben werden.

Ein Abbremsen des Elektromotors 10 durch die Sicherheitsbremsen 100, 200 ist insbesondere dann möglich, wenn die übergeordnete Steuereinheit 40 oder die Motorsteuerung 30 ausfallen. Ein Ausfall der Motorsteuerung 30 kann beispielsweise durch einen Defekt des Endstufenzwischenkreises 32, der Endstufentransistoren 36, 37, eines eventuell in der Endstufe 31 vorhandenen Bremswiderstandes, der Gebereinheit 20, der Antriebsleitungen 15 oder der Antriebswicklungen 14 verursacht werden. Ein derartiger Ausfall kann durch die Sicherheitsbremsen 100, 200 eigenständig erkannt werden, indem das an die Antriebswicklungen 14 anliegende Antriebssignal über die Zusatzwicklungen 16 überwacht wird.

Sicherheitsrelevante Komponenten der Sicherheitsbremsen 100, 200, wie die Kurzschlussschalteinrichtung 161 oder die Lastschalteinrichtung 152, können während des Betriebs der Motorsteuerungssysteme 2, 202 getestet werden. Bei einer Energieversorgung aus dem Antriebssignal können die Sicherheitsbremsen 100, 200 unabhängig von einer externen Energieversorgung betrieben werden. Insbesondere sind die Sicherheitsbremsen 100, 200 in diesem Fall unabhängig von einer Energieversorgung der übergeordneten Steuerung 40, der Motorsteuerung 30 oder des Elektromotors 10.

## Patentansprüche

1. Sicherheitsbremse (100, 200) für einen Antrieb (1, 201) mit einem Elektromotor (10), der eine Antriebswicklung (14) zur Beaufschlagung mit einem Antriebssignal aufweist,
wobei die Sicherheitsbremse (100, 200) einen Gleichrichter (110), einen Zwischenkreis (120) und eine Kontrolleinrichtung (130) zur Steuerung der Sicherheitsbremse (100, 200) aufweist, wobei der Zwischenkreis (120) über den Gleichrichter (110) an die Antriebswicklung (14) des Elektromotors (10) und/oder eine mit der Antriebswicklung (14) magnetisch gekoppelte Zusatzwicklung (16) des Elektromotors (10) angeschlossen ist und eine Zwischenkreisspannung führt,
wobei der Gleichrichter (110) dazu ausgebildet ist, durch Gleichrichtung einer an der Antriebswicklung (14) und/oder an der Zusatzwicklung (16) des Elektromotors (10) abfallenden Spannung die Zwischenkreisspannung zu erzeugen,
wobei die Sicherheitsbremse (100, 200) dazu ausgebildet ist, die Kontrolleinrichtung (130) über den Zwischenkreis (120) mit der Zwischenkreisspannung zu versorgen,
**dadurch gekennzeichnet, dass**
die Sicherheitsbremse (100, 200) zumindest einen Hochsetzsteller (160) umfasst, welcher zwischen dem Gleichrichter (110) und zumindest einem Zwischenkreiskondensator (121) des Zwischenkreises (120) angeordnet ist und zumindest eine Kurzschlussschalteinrichtung (161) umfasst,
wobei die Kurzschlussschalteinrichtung (161) so mit einer Gleichspannungsseite (112) des Gleichrichters (110) verbunden ist, dass die Gleichspannungsseite (112) über die Kurzschlussschalteinrichtung (161) kurzgeschlossen werden kann, und
wobei die Sicherheitsbremse (100, 200) dazu ausgebildet ist, dass die Kurzschlussschalteinrichtung (161) über die Kontrolleinrichtung (130) gesteuert werden kann.

2. Sicherheitsbremse (100, 200) gemäß Anspruch 1,
wobei die Sicherheitsbremse (100, 200) zumindest eine Antriebssensoreinrichtung (140) umfasst, welche dazu ausgebildet ist, über die Zusatzwicklung (16) das an der Antriebswicklung (14) anliegende Antriebssignal zu erfassen, und
wobei die Antriebssensoreinrichtung (140) dazu ausgebildet ist, ein dem Antriebssignal entsprechendes Antriebsmesssignal an die Kontrolleinrichtung (130) zu übertragen.

3. Sicherheitsbremse (100, 200) gemäß Anspruch 1 oder 2,
wobei die Sicherheitsbremse (100, 200) zumindest eine Energieaufnahmevorrichtung (150) umfasst, welche an den Zwischenkreis (120) angeschlossen ist.

4. Sicherheitsbremse (100, 200) gemäß Anspruch 3,
wobei die Energieaufnahmevorrichtung (150) zumindest einen Lastwiderstand (151) und zumindest eine Lastschalteinrichtung (152) umfasst,
wobei der Lastwiderstand (151) über die Lastschalteinrichtung (152) mit dem Zwischenkreis (120) verbunden ist,
wobei die Sicherheitsbremse (100, 200) dazu ausgebildet ist, dass die Lastschalteinrichtung (152) über die Kontrolleinrichtung (130) gesteuert wird.

5. Sicherheitsbremse (100, 200) gemäß einem der Ansprüche 1 bis 4,
wobei die Sicherheitsbremse (100, 200) zumindest eine Strommesseinrichtung (122) umfasst, welche dazu ausgebildet ist, einen durch den Gleichrichter (110) fließenden Gleichrichterstrom zu messen und ein Gleichrichterstromsignal an die Kontrolleinrichtung (130) zu übertragen.

6. Sicherheitsbremse (100, 200) gemäß einem der Ansprüche 1 bis 5,
wobei die Sicherheitsbremse (100, 200) zumindest eine Spannungsmesseinrichtung (125) umfasst, welche dazu ausgebildet ist, eine Zwischenkreisspannung zu messen und ein Zwischenkreisspannungssignal an die Kontrolleinrichtung (130) zu übertragen.

7. Antrieb (1, 201) mit zumindest einem Elektromotor (10) und zumindest einer Sicherheitsbremse (100, 200) nach Anspruch 1 bis 6,

8. Antrieb (1, 201) gemäß Anspruch 7,
wobei die Sicherheitsbremse (100, 200) dazu ausgebildet ist, über die Zusatzwicklung (16) ein Bremsmoment auf den Elektromotor (10) zu übertragen.

9. Antrieb (1, 201) gemäß einem der vorhergehenden Ansprüche, wobei die Sicherheitsbremse (100, 200) dazu ausgebildet ist, eine Abweichung einer Taktfrequenz des Antriebssignals von einer Solltaktfrequenz und/oder eine Abweichung eines Spannungswerts des Antriebssignals von einem Sollspannungswert zu detektieren.

10. Motorsteuerungssystem (2, 202) mit zumindest einem Antrieb (1, 201) gemäß einem der Ansprüche 7 bis 9, zumindest einer Motorsteuerung (30), zumindest einer übergeordneten Steuereinheit (40) und zumindest einem Datenübertragungsmedium (50),
wobei das Datenübertragungsmedium (50) die Motorsteuerung (30) mit der übergeordneten Steuereinheit (40) und der Sicherheitsbremse (100, 200) des Antriebs (1, 201) verbindet,
wobei die Motorsteuerung (30) mit der Antriebswicklung (14) des Elektromotors (10) verbunden ist und dazu ausgebildet ist, die Antriebswicklung (14) mit einem Antriebssignal zu beaufschlagen, wobei die übergeordnete Steuereinheit (40) dazu ausgebildet ist, über das Datenübertragungsmedium (50) Kommunikationsdaten mit der Motorsteuerung (30) und der Sicherheitsbremse (100, 200) des Antriebs (1, 201) auszutauschen.

11. Motorsteuerungssystem (2, 202) gemäß Anspruch 10 wobei der Antrieb (1, 201) zumindest eine Gebereinheit (20) umfasst, welche an dem Elektromotor (10) angeordnet und mit der Motorsteuerung (30) über zumindest eine Geberleitung (22) verbunden ist,
wobei die Gebereinheit (20) dazu ausgebildet ist, eine Bewegung des Elektromotors (10) zu erfassen und die Bewegung des Elektromotors (10) über die Geberleitung (22) an die Motorsteuerung (30) zurückzumelden,
wobei das Datenübertragungsmedium (50) die Motorsteuerung (30) und die Sicherheitsbremse (100, 200) über die Geberleitung (22) miteinander verbindet.

12. Verfahren zum Betreiben eines Motorsteuerungssystems (2, 202) umfassend einen Antrieb (1, 201) mit
einem Elektromotor (10), welcher eine Antriebswicklung (14) und eine mit der Antriebswicklung (14) magnetisch gekoppelte Zusatzwicklung (16) aufweist, und
einer Sicherheitsbremse (100, 200), welche einen über einen Gleichrichter (110) an die Zusatzwicklung (16) angeschlossenen und eine Zwischenkreisspannung führenden Zwischenkreis (120) und einen zwischen dem Gleichrichter (110) und einem Zwischenkreiskondensator (121) des Zwischenkreises (120) angeordneten Hochsetzsteller (160) umfasst,
wobei das Motorsteuerungssystem (2, 202) eine Motorsteuerung (30), eine übergeordnete Steuereinheit (40) und ein die Motorsteuerung (30) mit der übergeordneten Steuereinheit (40) und der Sicherheitsbremse (100, 200) verbindendes Datenübertragungsmedium (50) aufweist und
wobei das Verfahren die folgenden Schritte umfasst:
- Beaufschlagung der Antriebswicklung (14) mit einem von zumindest einer Endstufe (31) der Motorsteuerung (30) erzeugten Antriebssignal,
- Versorgung der Sicherheitsbremse (100, 200) über die Zusatzwicklung (16) mit elektrischer Energie aus dem Antriebssignal,
- Gleichrichtung einer an der Zusatzwicklung (16) abfallenden Spannung mittels des Gleichrichters (110) und
- Steuerung einer Kurzschlussschalteinrichtung (161) des Hochsetzstellers (160) zum Kurzschließen einer Gleichspannungsseite (112) des Gleichrichters (110), um eine an der Gleichspannungsseite (112) des Gleichrichters (110) anliegende Spannung auf die Zwischenkreisspannung zu transformieren.

13. Verfahren gemäß Anspruch 12 welches als zusätzliche Schritte umfasst:
- Aktivierung einer Sicherheitsstopfunktion der Motorsteuerung (30) durch die übergeordnete Steuereinheit (40),
- Freigabe einer Endstufe (31) der Motorsteuerung (30),
- Aufbau einer Datenverbindung zwischen der Sicherheitsbremse (100, 200) und der übergeordneten Steuereinheit (40) über das Datenübertragungsmedium (50),
- Deaktivierung der Sicherheitsstopfunktion der Motorsteuerung (30) durch die übergeordnete Steuereinheit (40),
wobei die Sicherheitsstopfunktion eine Übertragung eines Sicherheitsstop-Antriebssignals an die Antriebswicklung (14) umfasst, wobei der Elektromotor (10) des Antriebs (1, 201) durch das Sicherheitsstop-Antriebssignal in einer sicheren Stellung gehalten wird, und
wobei die Sicherheitsbremse (100, 200) des Antriebs (1, 201) das Sicherheitsstop-Antriebssignal über die Zusatzwicklung (16) des Elektromotors (10) detektiert.

## Claims

1. Safety brake (100, 200) for a drive (1, 201) having an electric motor (10) which has a drive winding (14) to which a drive signal is to be applied,
wherein the safety brake (100, 200) has a rectifier (110), an intermediate circuit (120) and a control device (130) for controlling the safety brake (100, 200), wherein the intermediate circuit (120) is connected via the rectifier (110) to the drive winding (14) of the electric motor (10) and/or an additional winding (16) of the electric motor (10), which additional winding is magnetically coupled to the drive winding (14), and carries an intermediate circuit voltage,
wherein the rectifier (110) is designed to generate the intermediate circuit voltage by rectifying a voltage which is dropped across the drive winding (14) and/or across the additional winding (16) of the electric motor (10),
wherein the safety brake (100, 200) is designed to supply the intermediate circuit voltage to the control device (130) via the intermediate circuit (120),
**characterized in that**
the safety brake (100, 200) comprises at least one step-up converter (160) which is arranged between the rectifier (110) and at least one intermediate circuit capacitor (121) of the intermediate circuit (120) and comprises at least one short-circuit switching device (161),
wherein the short-circuit switching device (161) is connected to a DC voltage side (112) of the rectifier (110) such that the DC voltage side (112) can be shortcircuited by means of the short-circuit switching device (161), and
wherein the safety brake (100, 200) is designed such that the short-circuit switching device (161) can be controlled by means of the control device (130).

2. Safety brake (100, 200) according to Claim 1,
wherein the safety brake (100, 200) comprises at least one drive sensor device (140) which is designed to detect the drive signal, which is applied to the drive winding (14), via the additional winding (16), and
wherein the drive sensor device (140) is designed to transmit a drive measurement signal, which corresponds to the drive signal, to the control device (130).

3. Safety brake (100, 200) according to Claim 1 or 2,
wherein the safety brake (100, 200) comprises at least one energy absorbing apparatus (150) which is connected to the intermediate circuit (120).

4. Safety brake (100, 200) according to Claim 3,
wherein the energy absorbing apparatus (150) comprises at least one load resistor (151) and at least one load switching device (152),
wherein the load resistor (151) is connected to the intermediate circuit (120) via the load switching device (152),
wherein the safety brake (100, 200) is designed such that the load switching device (152) is controlled by means of the control device (130).

5. Safety brake (100, 200) according to one of Claims 1 to 4,
wherein the safety brake (100, 200) comprises at least one current measuring device (122) which is designed to measure a rectifier current flowing through the rectifier (110) and to transmit a rectifier current signal to the control device (130).

6. Safety brake (100, 200) according to one of Claims 1 to 5,
wherein the safety brake (100, 200) comprises at least one voltage measuring device (125) which is designed to measure an intermediate circuit voltage and to transmit an intermediate circuit voltage signal to the control device (130).

7. Drive (1, 201) having at least one electric motor (10) and at least one safety brake (100, 200) according to Claims 1 to 6.

8. Drive (1, 201) according to Claim 7,
wherein the safety brake (100, 200) is designed to transmit a braking torque to the electric motor (10) via the additional winding (16).

9. Drive (1, 201) according to one of the preceding claims,
wherein the safety brake (100, 200) is designed to detect a deviation of a clock frequency of the drive signal from a setpoint clock frequency and/or a deviation of a voltage value of the drive signal from a setpoint voltage value.

10. Motor control system (2, 202) having at least one drive (1, 201) according to one of Claims 7 to 9, at least one motor controller (30), at least one superordinate control unit (40) and at least one data transmission medium (50),
wherein the data transmission medium (50) connects the motor controller (30) to the superordinate control unit (40) and the safety brake (100, 200) of the drive (1, 201),
wherein the motor controller (30) is connected to the drive winding (14) of the electric motor (10) and is designed to apply a drive signal to the drive winding (14), wherein the superordinate control unit (40) is designed to exchange communication data with the motor controller (30) and the safety brake (100, 200) of the drive (1, 201) via the data transmission medium (50).

11. Motor control system (2, 202) according to Claim 10,
wherein the drive (1, 201) comprises at least one encoder unit (20) which is arranged on the electric motor (10) and is connected to the motor controller (30) via at least one encoder line (22),
wherein the encoder unit (20) is designed to detect a movement of the electric motor (10) and to report back the movement of the electric motor (10) to the motor controller (30) via the encoder line (22),
wherein the data transmission medium (50) connects the motor controller (30) and the safety brake (100, 200) to one another via the encoder line (22).

12. Method for operating a motor control system (2, 202) comprising a drive (1, 201) having
an electric motor (10) which has a drive winding (14) and an additional winding (16) which is magnetically coupled to the drive winding (14), and
a safety brake (100, 200) which comprises an intermediate circuit (120), which is connected to the additional winding (16) via a rectifier (110) and carries an intermediate circuit voltage, and a step-up converter (160) which is arranged between the rectifier (110) and an intermediate circuit capacitor (121) of the intermediate circuit (120),
wherein the motor control system (2, 202) has a motor controller (30), a superordinate control unit (40) and a data transmission medium (50) which connects the motor controller (30) to the superordinate control unit (40) and the safety brake (100, 200), and
wherein the method comprises the following steps:
- applying a drive signal, which is produced by at least one output stage (31) of the motor controller (30), to the drive winding (14),
- supplying electrical energy from the drive signal to the safety brake (100, 200) via the additional winding (16),
- rectifying a voltage, which is dropped across the additional winding (16), by means of the rectifier (110), and
- controlling a short-circuit switching device (161) of the step-up converter (160) for short-circuiting a DC voltage side (112) of the rectifier (110) in order to transform a voltage which is applied to the DC voltage side (112) of the rectifier (110) into the intermediate circuit voltage.

13. Method according to Claim 12,
which comprises the additional steps of:
- activating a safety stop function of the motor controller (30) by way of the superordinate control unit (40),
- releasing an output stage (31) of the motor controller (30),
- establishing a data connection between the safety brake (100, 200) and the superordinate control unit (40) via the data transmission medium (50),
- deactivating the safety stop function of the motor controller (30) by way of the superordinate control unit (40),
wherein the safety stop function comprises transmission of a safety stop drive signal to the drive winding (14), wherein the electric motor (10) of the drive (1, 201) is held in a safe position by the safety stop drive signal, and
wherein the safety brake (100, 200) of the drive (1, 201) detects the safety stop drive signal via the additional winding (16) of the electric motor (10).

## Revendications

1. Frein de sécurité (100, 200) destiné à un entraînement (1, 201) comprenant un moteur électrique (10) qui comporte un enroulement d'entraînement (14) destiné à recevoir un signal d'entraînement,
le frein de sécurité (100, 200) comportant un redresseur (110), un circuit intermédiaire (120) et un dispositif de commande (130) destiné à commander le frein de sécurité (100, 200),
le circuit intermédiaire (120) étant raccordé par le biais du redresseur (110) à l'enroulement d'entraînement (14) du moteur électrique (10) et/ou à un enroulement supplémentaire (16) du moteur électrique (10), qui est couplé magnétiquement à l'enroulement d'entraînement (14), et conduisant une tension de circuit intermédiaire,
le redresseur (110) étant conçu pour générer la tension de circuit intermédiaire en redressant une tension aux bornes de l'enroulement d'entraînement (14) et/ou au bornes de l'enroulement supplémentaire (16) du moteur électrique (10),
le frein de sécurité (100, 200) étant conçu pour alimenter le dispositif de commande (130) en tension de circuit intermédiaire par le biais du circuit intermédiaire (120), **caractérisé en ce que** le frein de sécurité (100, 200) comprend au moins un convertisseur élévateur de tension (160) qui est disposé entre le redresseur (110) et au moins un condensateur (121) du circuit intermédiaire (120) et comprend au moins un dispositif de commutation de court-circuit (161),
le dispositif de commutation de court-circuit (161) étant relié à un côté tension continue (112) du redresseur (110) de sorte que le côté tension continue (112) puisse être court-circuité par le biais du dispositif de commutation de court-circuit (161), et
le frein de sécurité (100, 200) étant conçu pour commander le dispositif de commutation de court-circuit (161) par le biais du dispositif de commande (130).

2. Frein de sécurité (100, 200) selon la revendication 1,
le frein de sécurité (100, 200) comprenant au moins un dispositif de détection d'entraînement (140) qui est conçu pour détecter par le biais de l'enroulement supplémentaire (16) le signal d'entraînement appliqué à l'enroulement d'entraînement (14) et
le dispositif de détection d'entraînement (140) étant conçu pour transmettre un signal de mesure d'entraînement, correspondant au signal d'entraînement, au dispositif de commande (130).

3. Frein de sécurité (100, 200) selon la revendication 1 ou 2,
le frein de sécurité (100, 200) comprenant au moins un dispositif d'absorption d'énergie (150) qui est raccordé au circuit intermédiaire (120).

4. Frein de sécurité (100, 200) selon la revendication 3,
le dispositif d'absorption d'énergie (150) comprenant au moins une résistance de charge (151) et au moins un dispositif de commutation de charge (152),
la résistance de charge (151) étant reliée au circuit intermédiaire (120) par le biais du dispositif de commutation de charge (152),
le frein de sécurité (100, 200) étant conçu pour commander le dispositif de commutation de charge (152) par le biais du dispositif de commande (130).

5. Frein de sécurité (100, 200) selon l'une des revendications 1 à 4,
le frein de sécurité (100, 200) comprenant au moins un dispositif de mesure de courant (122) qui est conçu pour mesurer un courant circulant dans le redresseur (110) et pour transmettre un signal de courant de redresseur au dispositif de commande (130).

6. Frein de sécurité (100, 200) selon l'une des revendications 1 à 5,
le frein de sécurité (100, 200) comprenant au moins un dispositif de mesure de tension (125) qui est conçu pour mesurer une tension de circuit intermédiaire et pour transmettre un signal de tension de circuit intermédiaire au dispositif de commande (130).

7. Entraînement (1, 201) comprenant au moins un moteur électrique (10) et au moins un frein de sécurité (100, 200) selon les revendications 1 à 6.

8. Entraînement (1, 201) selon la revendication 7,
le frein de sécurité (100, 200) étant conçu pour transmettre un couple de freinage au moteur électrique (10) par le biais de l'enroulement supplémentaire (16).

9. Entraînement (1, 201) selon l'une des revendications précédentes,
le frein de sécurité (100, 200) étant conçu pour détecter un écart entre une fréquence d'horloge du signal de commande et une fréquence d'horloge de consigne et/ou un écart entre une valeur de tension du signal d'attaque et une valeur de tension de consigne.

10. Système de commande de moteur (2, 202) comprenant au moins un entraînement (1, 201) selon l'une des revendications 7 à 9, au moins une commande de moteur (30), au moins une unité de commande de niveau supérieur (40) et au moins un support de transmission de données (50),
le support de transmission de données (50) reliant la commande de moteur (30) à l'unité de commande de niveau supérieur (40) et au frein de sécurité (100, 200) de l'entraînement (1, 201),
la commande de moteur (30) étant reliée à l'enroulement d'entraînement (14) du moteur électrique (10) et étant conçue pour appliquer un signal d'entraînement à l'enroulement d'entraînement (14),
l'unité de commande de niveau supérieur (40) étant conçue pour échanger des données de communication avec la commande de moteur (30) et le frein de sécurité (100, 200) de l'entraînement (1, 201) par le biais du support de transmission de données (50).

11. Système de commande de moteur (2, 202) selon la revendication 10,
l'entraînement (1, 201) comprenant au moins une unité de transmission (20) qui est disposée au niveau du moteur électrique (10) et qui est reliée à la commande de moteur (30) par le biais d'au moins une ligne de transmission (22),
l'unité de transmission (20) étant adaptée pour détecter un mouvement du moteur électrique (10) et pour signaler le mouvement du moteur électrique (10) à la commande de moteur (30) par le biais de la ligne de codeur (22),
le support de transmission de données (50) reliant la commande de moteur (30) et le frein de sécurité (100, 200) entre eux par le biais de la ligne de transmission (22) .

12. Procédé de fonctionnement d'un système de commande de moteur (2, 202) comprenant un entraînement (1, 201) qui comporte
un moteur électrique (10) qui comporte un enroulement d'entraînement (14) et un enroulement supplémentaire (16) couplé magnétiquement à l'enroulement d'entraînement (14), et
un frein de sécurité (100, 200) qui comporte un circuit intermédiaire (120) raccordé à l'enroulement supplémentaire (16) par le biais d'un redresseur (110) et conduisant une tension de circuit intermédiaire et un convertisseur élévateur arrangé (160) disposé entre le redresseur (110) et un condensateur (121) du circuit intermédiaire (120),
le système de commande de moteur (2, 202) comprenant une commande de moteur (30), une unité de commande de niveau supérieur (40) et un support de transmission de données (50) reliant la commande de moteur (30) à l'unité de commande de niveau supérieur (40) et au frein de sécurité (100, 200), et
le procédé comprenant les étapes suivantes :
- appliquer à l'enroulement de commande (14) un signal de commande généré par au moins un étage de sortie (31) de la commande de moteur (30),
- alimenter le frein de sécurité (100, 200) par le biais de l'enroulement supplémentaire (16) avec de l'énergie électrique provenant du signal d'entraînement,
- redresser une tension aux bornes de l'enroulement supplémentaire (16) au moyen du redresseur (110) et
- commander un dispositif de commutation de court-circuit (161) du convertisseur élévateur de tension (160) pour court-circuiter un côté tension continue (112) du redresseur (110) pour transformer une tension, appliquée au côté tension continue (112) du redresseur (110), en la tension de circuit intermédiaire.

13. Procédé selon la revendication 12, lequel comporte les étapes supplémentaires suivantes :
- activer une fonction d'arrêt de sécurité de la commande de moteur (30) par le biais de l'unité de commande de niveau supérieur (40),
- débloquer un étage de sortie (31) de la commande de moteur (30),
- établir une liaison de données entre le frein de sécurité (100, 200) et l'unité de commande de niveau supérieur (40) par le biais du support de transmission de données (50),
- désactiver la fonction d'arrêt de sécurité de la commande de moteur (30) par l'unité de commande de niveau supérieur (40),
la fonction d'arrêt de sécurité comprenant la transmission d'un signal d'entraînement d'arrêt de sécurité à l'enroulement d'entraînement (14),
le moteur électrique (10) de l'entraînement (1, 201) étant maintenu dans une position sécurisée par le signal d'entraînement d'arrêt de sécurité, et
le frein de sécurité (100, 200) de l'entraînement (1, 201) détectant le signal d'entraînement d'arrêt de sécurité par le biais de l'enroulement supplémentaire (16) du moteur électrique (10).
